# EUROPEAN PATENT APPLICATION

(11) **EP 4 230 995 A1**
(43) Date of publication of application: **23.08.2023**
(21) Application number: 21880227.0
(22) Date of filing: 15.10.2021
(51) Int. Cl.: G01N 15/14, G01N 37/00, G01N 21/53, G01N 21/59

(54) **FLOW CYTOMETER, CELL SORTER, OPTICAL INFORMATION GENERATION METHOD, AND PROGRAM**

(30) Priority: 15.10.2020 JP 2020174037; 01.07.2021 JP 2021110063
(71) Applicant: ThinkCyte K.K., Tokyo 113-0033 (JP)
(72) Inventor: IMAI, Toru, Tokyo 113-0033 (JP); ADACHI, Hiroaki, Tokyo 113-0033 (JP); TODA, Keisuke, Tokyo 113-0033 (JP)
(74) Representative: Ernest Gutmann - Yves Plasseraud S.A.S.
(86) International application number: PCT/JP2021/038306
(87) International publication number: WO 2022/080492

(57) **Abstract**

A flow cytometer includes: a light source; a microfluidic device; a photodetector; an information generation device which generates optical information indicating a morphology of an observation target on the basis of optical signal intensity; and a spatial light modulation unit which is installed on an optical path between the light source and the photodetector and structures any one of illumination light irradiated from the light source toward the flow path and signal light from the observation target, wherein in the flow path provided with the microfluidic device, a plurality of optical signal detection positions are arranged linearly at equal intervals in a predetermined direction of the flow path by structuring the illumination light or the signal light and a plurality of trigger signal detection positions for detecting a trigger signal by which the information generation device starts the generation of the optical information are arranged to be separated by the same predetermined distance in a length direction of the flow path while respectively corresponding to the plurality of optical signal detection positions.

## Description

### [Technical Field]

The present invention relates to a flow cytometer, a cell sorter, an optical information generation method, and a program.

Priority is claimed on Japanese Patent Application No. 2020-174037 filed on October 15, 2020 and Japanese Patent Application No. 2021-110063 filed on July 1, 2021 and the contents thereof are incorporated herein.

### [Background Art]

Conventionally, a flow cytometry method that fluorescently stains an observation target and evaluates the characteristics of the observation target from the total amount of fluorescence brightness and a flow cytometer using this flow cytometry method are known (for example, Patent Document 1). The flow cytometer is a device which irradiates particles such as cells suspended in a liquid moving in a set flow path with illumination light such as laser light and measures the interaction of particles and light, such as light scattering, by means of a detector. In the conventional flow cytometry method that evaluates the observation target by the total amount of fluorescence brightness, it was difficult to observe the morphological characteristics of the observed cells in detail. However, fluorescence microscopes and imaging cytometers for evaluating microparticles such as cells and bacteria using images are known as devices for observing morphological characteristics such as intracellular localization of cells.

As one of the imaging cytometers, there is known a flow cytometer using a ghost cytometry method (hereinafter, referred to as a GC method) that can acquire more detailed morphological information of an observation target by illuminating and measuring the observation target with structured illumination light having a predetermined illumination pattern. Further, in the flow cytometer using this GC method, since the length of the illumination pattern to be irradiated can be shortened by adopting a randomly structured illumination pattern as the illumination pattern, it is possible to increase the measurement speed. In the measurement according to the GC method, for example, the measurement speed can be increased by using a compression sensing method that uses a single-element light receiving element such as a photomultiplier tube (PMT) and a method that performs machine learning as it is without converting an optical signal into an image.

However, in the measurement according to the GC method using the structured illumination pattern, since the morphological characteristics or the like of the observation target that cannot be obtained by the conventional flow cytometry can be observed in detail and this measurement is sensitive to the positional deviation of the streamline, there was a problem that the measurement was not stably and reproducibly performed when a positional deviation of a streamline occurred in the observation target flowing through the flow path during measurement. Here, the positional deviation of the streamline indicates that the passage position of the observation target flowing through the flow path together with the fluid is not constant in any one or more directions of the width direction and the depth direction of the flow path. Accordingly, the passage position of the observation target in the flow path relatively deviates in any one or more directions of the width direction and the depth direction of the flow path with respect to the structured illumination pattern by the irradiation of the irradiation light and variation occurs in measurement results.

In the imaging flow cytometers, for example, an imaging flow cytometer in which a linear pattern is disposed in a flow path by using a spatial filter is known as a robust detection method against a positional deviation of a streamline (for example, Patent Document 2). In the imaging flow cytometers in which linear patterns are arranged, an imaging flow cytometer that determines a recording time on the basis of an integrated value of signals is known (Non-Patent Document 1).

### [Citation List]

### [Patent Document]

[Patent Document 1]
   Japanese Unexamined Patent Application No. 2011-099848
[Patent Document 2]
   US Patent Application Publication No. 2017/0227466

### [Non-Patent Document]

### [Non-Patent Document 1]

Yi Gu, Alex Ce Zhang, Yuanyuan Han, Jie Li, Clark Chen, Yu-Hwa Lo, "Machine Learning Based Real-Time Image-Guided Cell Sorting and Classification", "Cytometry Part A", international Society for Advancement of Cytometry, March 25, 2019

### [Summary of Invention]

### [Technical Problem]

The imaging flow cytometers are required to have robust measurement against the positional deviation of the streamline and to shorten and speed up the processing time required for measurement. Moreover, in order to use the imaging flow cytometers for general purpose, it was necessary to consider the calculation cost for image processing.

In a method of reconstructing and measuring an image of an observation target from an optical signal received by a photodetector, robustness of measurement against a positional deviation of a streamline has been achieved, but since measurement conditions (such as the need to set a long measurement time or reduce the flow velocity for the measurement) are restricted or the reconstruction requires a huge amount of computational resources in order to reconstruct sharp images with high resolution, it was sometimes difficult to shorten the processing time and increase the throughput.

When the linear patterns are just arranged on the flow path as in the imaging flow cytometer described in Patent Document 2, robustness of the measurement against the positional deviation of the streamline has been achieved, but the signal recording time cannot be kept short and constant.

Further, in the imaging flow cytometer described in Non-Patent Document 1, the integrated value of the signal is calculated and the recording time is determined on the basis of the time when the peak value is detected. However, this method is not suitable for high-speed measurement because the irradiation pattern needs to be spaced for reconstruction. Further, since computational resources always need to be ensured during measurement to calculate the integrated value of the signal and its peak value, there is a possibility that the processing speed will decrease in addition to the problem that the calculation cost increases.

As described above, in the conventional imaging flow cytometer, since the recording time cannot be kept short and constant, the irradiation patterns need to be spaced, and the recording time needs to be determined on the basis of the calculated value from the signal, it requires long time for measurement. As a result, the simultaneous achievement of the positional deviation of the streamline and the high-speed measurement was hindered. In this way, a flow cytometer capable of realizing high-speed measurement while ensuring reproducibility of data against the positional deviation of the streamline is still in demand when analyzing the morphological information of the observation target at high resolution.

The present invention has been made in view of the above-described problems and an object of the present invention is to provide an imaging flow cytometer, a cell sorter, an optical information generation method, and a program capable of realizing high-speed measurement while ensuring robust measurement against a positional deviation of a streamline. In the measurement according to the GC method, the high-speed measurement was achieved without any calculation cost by the compression sensing method and the method of directly performing machine learning on the optical signal, but there was an issue with the robustness of the measurement when the position of the streamline of the observation target flowing through the flow path was deviated during measurement. By the present invention, a measurement method that is highly robust against the positional deviation of the streamline, that is, a method that can perform highly accurate measurement with good reproducibility even when the positional deviation of the streamline occurs in the observation target is provided, for example, even in the flow cytometer using the GC method using the above randomly structured illumination pattern which is sensitive to the positional deviation of the streamline.

### [Solution to Problem]

The present invention has been made to solve the above-described problems and one aspect of the present invention is a flow cytometer including: a light source which emits illumination light toward an observation target; a microfluidic device which is provided with a flow path through which the observation target is able to flow together with a fluid; a photodetector which detects optical signal intensity as intensity of signal light emitted from the observation target in time series; an information generation device which generates optical information indicating a morphology of the observation target on the basis of the optical signal intensity detected by the photodetector; and a spatial light modulation unit which is installed on an optical path between the light source and the photodetector and structures any one of the illumination light irradiated from the light source toward the flow path and the signal light emitted from the observation target toward the photodetector, wherein in the flow path provided in the microfluidic device, a plurality of optical signal detection positions for detecting the optical signal intensity detected by the photodetector by a common method for each portion of the observation target are arranged linearly at equal intervals in a predetermined direction of the flow path by structuring the illumination light or the signal light by the spatial light modulation unit and a plurality of trigger signal detection positions for detecting a trigger signal by which the information generation device starts the generation of the optical information are arranged to be separated by the same predetermined distance in a length direction of the flow path while respectively corresponding to the plurality of optical signal detection positions.

Further, according to one aspect of the present invention, in the flow cytometer, the predetermined direction of the flow path is a width direction of the flow path.

Further, according to one aspect of the present invention, in the flow cytometer, the plurality of optical signal detection positions are arranged on a straight line inclined with respect to the width direction of the flow path and do not overlap each other in the length direction of the flow path.

Further, according to one aspect of the present invention, in the flow cytometer, the plurality of optical signal detection positions are arranged without any gap in the width direction of the flow path.

Further, one aspect of the present invention is a cell sorter including: the flow cytometer; and a sorting unit which sorts the observation target, wherein in the flow path provided in the microfluidic device, sorting trigger signal detection positions for detecting a sorting trigger signal for determining when the sorting unit sorts the observation target are arranged linearly in a predetermined direction of the flow path.

Further, according to one aspect of the present invention, in the flow cytometer, the predetermined direction of the flow path is a depth direction of the flow path.

Further, according to one aspect of the present invention, in the flow cytometer, the plurality of optical signal detection positions are arranged on a straight line inclined with respect to the depth direction of the flow path and do not overlap each other in the length direction of the flow path.

Further, according to one aspect of the present invention, in the flow cytometer, the plurality of optical signal detection positions are arranged without any gap in the depth direction of the flow path.

Further, according to one aspect of the present invention, in the flow cytometer, the trigger signal detection positions are disposed on an upstream side of the flow path in relation to the optical signal detection positions.

Further, according to one aspect of the present invention, in the flow cytometer, the trigger signal detection positions are also served as the plurality of optical signal detection positions.

Further, according to one aspect of the present invention, in the flow cytometer, the spatial light modulation unit is a spatial filter which is installed in an optical path between the light source and the flow path and has a plurality of light transmission regions having the same shape and size at positions corresponding to the plurality of optical signal detection positions, the illumination light from the light source is structured by the spatial light modulation unit, and the structured illumination light is irradiated to the optical signal detection position disposed in the flow path.

Further, according to one aspect of the present invention, in the flow cytometer, the optical signal detection positions are illuminated by the same type of structured light.

Further, according to one aspect of the present invention, in the flow cytometer, the spatial light modulation unit is a spatial filter which is installed in an optical path between the flow path and the photodetector and has a plurality of light transmission regions having the same shape and size at positions corresponding to the plurality of the optical signal detection positions arranged in the flow path, and the photodetector detects the optical signal intensity in time series through the plurality of light transmission regions of the spatial filter.

Further, according to one aspect of the present invention, in the flow cytometer, the depth direction of the flow path is inclined with respect to a propagation direction of the structured illumination light or a propagation direction of the structured signal light.

Further, according to one aspect of the present invention, in the flow cytometer, the plurality of trigger signal detection positions to detect a trigger signal by which the information generation device starts the generation of the optical information are arranged to be separated by the same predetermined distance in the length direction of the flow path while respectively corresponding to the plurality of optical signal detection positions due to the structuring.

Further, according to one aspect of the present invention, in the flow cytometer, an optical signal detection line is provided on a plane of a width-direction position of the flow path in which the plurality of optical signal detection positions are arranged linearly at equal intervals with a positional deviation in the depth direction of the flow path and the length direction of the flow path, and the plurality of optical signal detection lines are arranged linearly at equal intervals at different width-direction positions of the flow path and are arranged in parallel at different length-direction positions of the flow path.

Further, one aspect of the present invention is an optical information generation method of generating optical information for an observation target using a flow cytometer including: a light source which emits illumination light toward an observation target; a microfluidic device which is provided with a flow path through which the observation target is able to flow together with a fluid; a photodetector which detects the optical signal intensity as intensity of signal light emitted from the observation target in time series; an information generation device which generates optical information indicating a morphology of the observation target on the basis of the optical signal intensity detected by the photodetector; and a spatial light modulation unit which is installed on an optical path between the light source and the photodetector and structures any one of the illumination light irradiated from the light source toward the flow path and the signal light emitted from the observation target toward the photodetector, in the flow path provided with the microfluidic device in the flow cytometer, a plurality of optical signal detection positions being arranged linearly at equal intervals in a predetermined direction of the flow path by structuring the illumination light or the signal light by the spatial light modulation unit and a plurality of trigger signal detection positions being arranged to be separated by the same predetermined distance in a length direction of the flow path while respectively corresponding to the plurality of optical signal detection positions, the optical information generation method comprising: a trigger signal detection step of detecting a trigger signal for the information generation device to start the generation of optical information at the trigger signal detection position; an optical signal detection step of detecting the optical signal intensity detected by the photodetector at the optical signal detection position by a common method for each portion of the observation target; an optical information generation start step of starting the generation of the optical information when the trigger signal is detected in the trigger signal detection step; and an optical information generation step of generating the optical information on the basis of the optical signal intensity detected in the optical signal detection step when the generation of the optical information is started in the optical information generation start step.

Further, one aspect of the present invention is a program of allowing a flow cytometer, including: a light source which emits illumination light toward an observation target; a microfluidic device which is provided with a flow path through which the observation target is able to flow together with a fluid; a photodetector which detects optical signal intensity as intensity of signal light emitted from the observation target in time series; an information generation device which generates optical information indicating a morphology of the observation target on the basis of the optical signal intensity detected by the photodetector; and a spatial light modulation unit which is installed on an optical path between the light source and the photodetector and structures any one of the illumination light irradiated from the light source toward the flow path and the signal light emitted from the observation target toward the photodetector, in the flow path provided with the microfluidic device in the flow cytometer, a plurality of optical signal detection positions being arranged linearly at equal intervals in a predetermined direction of the flow path by structuring the illumination light or the signal light by the spatial light modulation unit and a plurality of trigger signal detection positions being arranged to be separated by the same predetermined distance in a length direction of the flow path while respectively corresponding to the plurality of optical signal detection positions, to perform an optical information generation start step of starting the generation of the optical information when the trigger signal is detected in a trigger signal detection step where a trigger signal for the information generation device to start the generation of the optical information at the trigger signal detection position is detected and an optical information generation step of generating the optical information on the basis of the optical signal intensity detected in an optical signal detection step where the optical signal intensity detected by the photodetector is detected by a common method for each portion of the observation target at the optical signal detection position when the generation of the optical information has already been started in the optical information generation start step in order to generate the optical information for the observation target in the flow cytometer by a computer.

### [Advantageous Effects of Invention]

According to the present invention, it is possible to realize high-speed measurement while ensuring robust measurement against a positional deviation of a streamline.

### [Brief Description of Drawings]

FIG. 1 is a diagram showing an example of a flow cytometer according to a first embodiment of the present invention.
FIG. 2 is a diagram showing an example of a spatial light modulation unit according to the first embodiment of the present invention.
FIG. 3 is a diagram showing an example of an irradiation position according to the first embodiment of the present invention.
FIG. 4 is a diagram showing an example of a correspondence relationship between an optical signal detection position and a portion constituting a cell according to the first embodiment of the present invention.
FIG. 5 is a diagram showing an example of temporal changes in optical signal intensity according to the first embodiment of the present invention.
FIG. 6 is a diagram showing an example of a configuration of an information generation device according to the first embodiment of the present invention.
FIG. 7 is a diagram showing an example of a recording process according to the first embodiment of the present invention.
FIG. 8 is a diagram showing an example of a flow cytometer according to a first modified example of the first embodiment of the present invention.
FIG. 9 is a diagram showing an example of a flow cytometer according to a second modified example of the first embodiment of the present invention.
FIG. 10 is a diagram showing an example of an irradiation position according to a second embodiment of the present invention.
FIG. 11 is a diagram showing an example of a cell sorter according to a third embodiment of the present invention.
FIG. 12 is a diagram showing an example of a sorting trigger signal detection position according to the third embodiment of the present invention.
FIG. 13 is a diagram showing an example of a configuration of an information generation device according to the third embodiment of the present invention.
FIG. 14 is a diagram showing an example of a flow cytometer according to a fourth embodiment of the present invention.
FIG. 15 is a diagram showing an example of an irradiation position according to the fourth embodiment of the present invention.
FIG. 16 is a diagram showing an example of a correspondence relationship between an optical signal detection position and a position constituting a cell according to the fourth embodiment of the present invention.
FIG. 17 is a diagram showing an example of temporal changes in optical signal intensity according to the fourth embodiment of the present invention.
FIG. 18 is a diagram showing an example of an irradiation position according to a modified example of the fourth embodiment of the present invention.
FIG. 19 is a diagram showing an example of an irradiation position according to a fifth embodiment of the present invention.
FIG. 20 is a diagram showing an example of a correspondence relationship between an optical signal detection position and a portion constituting a cell according to the fifth embodiment of the present invention.
FIG. 21 is a diagram showing an example of a flow cytometer according to a sixth embodiment of the present invention.
FIG. 22 is a diagram showing an example of a positional relationship between a flow path and a mask according to a sixth embodiment of the present invention.
FIG. 23 is a diagram showing an example of an irradiation position according to a seventh embodiment of the present invention.

### [Description of Embodiments]

### (First embodiment)

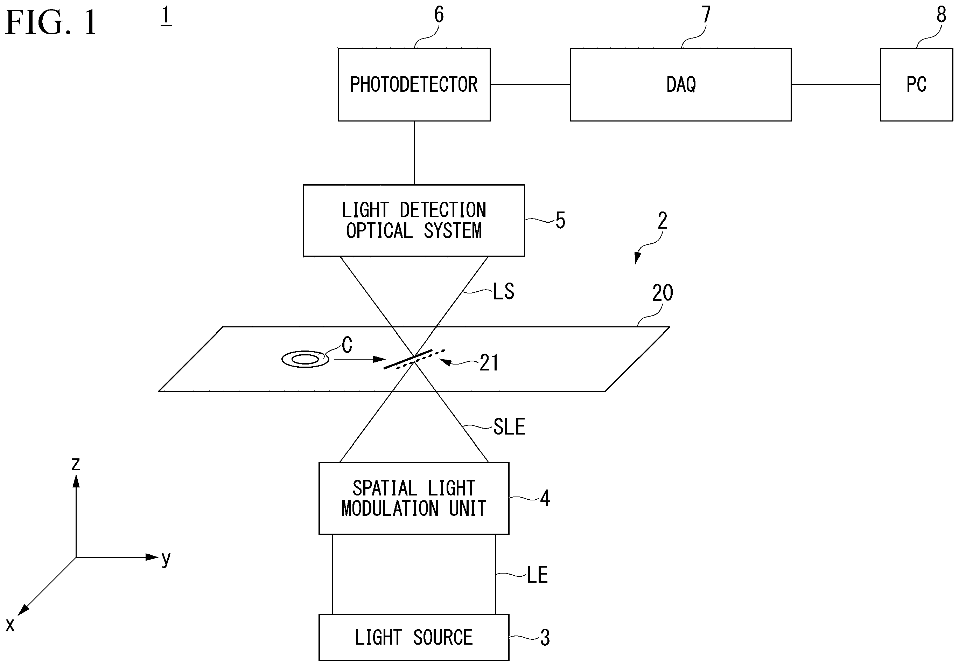

Hereinafter, embodiments of the present invention will be described in detail with reference to the drawings. FIG. 1 is a diagram showing an example of a flow cytometer 1 according to this embodiment. The flow cytometer 1 includes a microfluidic device 2, a light source 3, a spatial light modulation unit 4, a light detection optical system 5, a photodetector 6, a data acquisition (DAQ) device 7, and a personal computer (PC) 8.

The microfluidic device 2 includes a flow path 20 through which a cell C can flow together with a fluid. The flow velocity of the fluid flowing through the flow path 20 is a constant velocity during the measurement of an observation target. Further, the microfluidic device 2 allows a plurality of cells to sequentially flow into the flow path 20, but the number of the cells that pass at one time during the measurement of the observation target is one. The cell C is an example of the observation target. Additionally, the observation target is not limited to the cell C and may be fine particles or the like as another example. Additionally, the observation target may be referred to as a measurement target. Additionally, the fluid flowing through the flow path 20 may be referred to as a liquid flowing through the flow path 20.

Here, the figure appropriately shows a xyz coordinate system as a three-dimensional orthogonal coordinate system. In this embodiment, the x-axis direction is the width direction of the flow path 20. Further, the y-axis direction is the length direction of the flow path 20. The z-axis direction is the direction orthogonal to the flow path 20 and the depth direction of the flow path 20. The depth direction of the flow path 20 is also referred to as the height direction of the flow path 20. The flow of the fluid in the flow path 20 moves the cell C in the +y direction of the y-axis direction. The length direction of the flow path 20 is the direction of the fluid flow in the flow path 20. Further, each of the width direction of the flow path 20 and the depth direction of the flow path 20 is a direction perpendicular to the streamline of the fluid flowing together with the cell C. Additionally, the direction of the fluid flow in the flow path 20 may be referred to as the flow direction of the flow path 20.

Furthermore, in this embodiment, the width and the depth of the flow path 20 are the same as an example. That is, the cross-section of the flow path 20 is square. The width and the depth of the flow path 20 may be different. That is, the cross-section of the flow path 20 may be rectangular.

Here, the light source 3 and the spatial light modulation unit 4 function to irradiate the flow path 20 with structured illumination light SLE as will be described below.

The light source 3 irradiates the flow path 20 with illumination light LE, which is structured through the spatial light modulation unit 4, as the structured illumination light SLE. The illumination light LE emitted by the light source 3 may be coherent light or incoherent light. An example of coherent light is laser light, and an example of incoherent light is light emitting diode (LED) light. In this embodiment, the illumination light LE emitted by the light source 3 is, for example, coherent light.

In the example shown in FIG. 1, the spatial light modulation unit 4 is disposed on the optical path between the light source 3 and the flow path 20. This arrangement configuration is also referred to as a structured illumination configuration. The structured illumination is, for example, a configuration for irradiating the illumination light LE as the structured illumination light SLE structured by the spatial light modulation unit 4 and the structured illumination light SLE is imaged in the flow path 20 as a structured illumination pattern 21. Furthermore, in the description below, the optical position in which the structured illumination light SLE is irradiated in the flow path 20 is also referred to as the irradiation position. Further, details of the structured illumination pattern 21 will be described later. In the example of FIG. 1, the spatial light modulation unit 4 is disposed on the optical path from the light source 3 to the flow path 20, but can be disposed on the optical path between the flow path 20 and the photodetector 6 as will be described in the later modified examples. Further, as in the example shown in FIG. 1, structuring is described such that the spatial light modulation unit 4 changes the optical characteristics of irradiated light (in the example of FIG. 1, the illumination light LE) to be converted into light having a specific illumination pattern (in the example of FIG. 1, converting into light irradiated in the flow path 20 as the structured illumination light SLE).

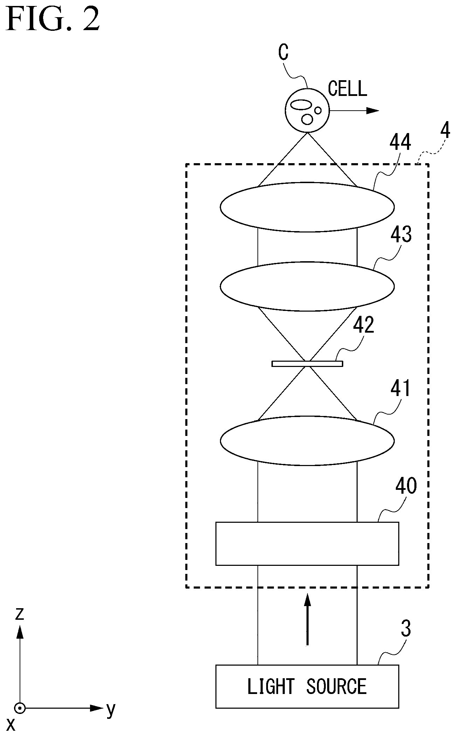

Here, the spatial light modulation unit 4 will be described with reference to FIG. 2. FIG. 2 is a diagram showing an example of the spatial light modulation unit 4 according to this embodiment. The spatial light modulation unit 4 includes a spatial modulator 40, a first lens 41, a spatial filter 42, a second lens 43, and an objective lens 44. The spatial modulator 40, the first lens 41, the spatial filter 42, the second lens 43, and the objective lens 44 in the spatial light modulation unit 4 are arranged on the optical path between the light source 3 and the flow path 20 in this order from the side of the light source 3 in the example of FIG. 2. In FIG. 2, although a case in which the illumination light LE is parallel light is described, the configuration is not limited thereto, and the spatial light modulation unit 4 can be configured to include a changed number of lenses or spatial filters depending on the situation.

The spatial modulator 40 has a plurality of regions different from each other and changes (modulates) the characteristics of the light from the light source 3 for each region. The spatial modulator 40 modulates the optical characteristics of the transmitted illumination light LE to different states in two or more regions among the plurality of regions constituting itself. Here, the optical characteristics of the illumination light LE are, for example, characteristics related to any one or more of light intensity, wavelength, phase, and polarization state, but are not limited to these. The spatial modulator 40 is, for example, a diffractive optical element (DOE), a spatial light modulator (SLM), or a digital micromirror device (DMD). Additionally, when the illumination light LE emitted by the light source 3 is incoherent light, the spatial modulator 40 is preferably a DMD.

In this embodiment, the spatial modulator 40 is DOE as an example.

In this embodiment, the observation target is irradiated with the structured illumination light SLE modulated by the spatial modulator 40 at the irradiation position. How the structured illumination pattern 21 is formed at the irradiation position is determined by how the light transmitted through each of the plurality of regions constituting the spatial modulator 40 is modulated. For example, the structured illumination light SLE can be configured such that the intensity of the illumination light is modulated by the spatial light modulation unit, the illumination light is irradiated only at the irradiation position, and the illumination light is not irradiated at positions other than the irradiation position. In that case, the structured illumination pattern 21 is formed as a collection of illuminated illumination light.

A region of a minimum unit (hereinafter, also referred to as a light spot) that constitutes the structured illumination pattern 21 exhibits a three-dimensional shape. The region is illuminated in the same plane as structured illumination light SLE with a pattern consisting of, for example, a plurality of equal squares. For example, the cell C passing through the irradiation position emits light when fluorescent molecules contained therein are excited by the structured illumination light SLE. This luminescence (that is, fluorescence) is an example of signal light LS emitted from the cell C. Other examples of the signal light LS include transmitted light in which the structured illumination light SLE is transmitted through the cell C, scattered light in which the structured illumination light SLE is scattered by the cell C, and interference light between light in which the structured illumination light SLE is transmitted through or scattered by the cell C and other light not transmitted through or scattered by the cell C. Furthermore, the above is an example, and the signal light LS is not limited to these.

At the irradiation position, the light spot which is the minimum unit constituting the structured illumination pattern 21 can have a cubic, cylindrical, or spherical shape. In that case, the shapes of the light spots that constitute the structured illumination pattern 21 are square, circular, rectangular, polygonal, and elliptical on the same plane. Although the size of the minimum unit region that constitutes the structured illumination pattern 21 can be freely changed, it is preferable that the size of the minimum unit region is set to be sufficiently small to the size of the observation target (for example, cell C) and the size of the internal structure to be observed.

The first lens 41 collects the structured illumination light SLE transmitted through the spatial modulator 40 onto the spatial filter 42.

The spatial filter 42 removes unnecessary light for the structured illumination pattern 21 at the irradiation position from the structured illumination light SLE imaged by the first lens 41.

The second lens 43 collimates the structured illumination light SLE from which unnecessary light has been removed by the spatial filter 42.

The objective lens 44 collects the structured illumination light SLE collimated by the second lens 43 and forms an image at the irradiation position of the flow path 20. In this embodiment, the structured illumination light SLE transmitted through the objective lens 44 is irradiated to the cell C at the irradiation position of the flow path 20.

Additionally, the objective lens 44 may be a dry objective lens or an immersion objective lens. The immersion objective lens is an oil immersion lens, a water immersion lens, or the like.

Returning to FIG. 1, the description of the configuration of the flow cytometer 1 is continued.

The light detection optical system 5 includes an imaging optical system that forms an image of the cell C on the photodetector 6. The signal light LS from the cell C is collected by the imaging lens included in this imaging optical system, and the image of the cell C is formed at the position of the photodetector 6. The signal light LS from the cell C is, as described above, fluorescence, transmitted light, scattered light, interference light, or the like. An imaging lens included in the imaging optical system is disposed at a position in which the irradiation position of the flow path 20 is focused. Further, the light detection optical system 5 may further include a dichroic mirror and a wavelength selective filter in addition to the imaging optical system.

The photodetector 6 detects an image of the cell C which is formed from the signal light LS by the imaging optical system. Here, the photodetector 6 detects the optical signal and converts the optical signal into an electrical signal. The photodetector 6 is, for example, a photomultiplier tube (PMT). The photodetector 6 detects optical signals in time series. The photodetector 6 may be a single sensor or multiple sensors.

As an example, the light detection optical system 5 and the photodetector 6 are arranged at the upper side of the flow path 20 (the +z direction of the z-axis direction). Additionally, the photodetector 6 may be disposed at a position other than the upper side of the flow path 20. The photodetector 6 may be disposed at the right side (the +x-axis direction), left side (the -x-axis direction), or lower side (the -z direction of the z-axis direction) of the flow path 20. In other words, the photodetector 6 can be disposed at one or more positions of the lateral direction (the side surface direction of the flow path 20, that is, the +x or -x direction from the flow path 20) or the front to rear direction (the direction of the upper and lower surfaces of the flow path 20, that is, the +z or -z direction from the flow path 20) with respect to a direction in which the structured illumination light SLE is incident to the irradiation position of the flow path 20.

The light detection optical system 5 is disposed on the optical path between the flow path 20 and the photodetector 6 at a position corresponding to the position with respect to the flow path 20 of the photodetector 6. For example, when the photodetector 6 is disposed at the right side of the flow path 20 (the +x-axis direction), the light detection optical system 5 is disposed on the optical path between the flow path 20 and the photodetector 6 at the right side of the flow path 20 (the +x-axis direction).

The DAQ device 7 converts the electrical signal waveform output by the photodetector 6 into electronic data for each waveform. The electronic data includes a combination of time and intensity of electrical signals. The DAQ device 7 is, for example, an oscilloscope.

The PC 8 generates optical information on the morphology of the cell C on the basis of the electronic data output from the DAQ device 7. Further, the PC 8 stores the optical information generated by itself. In the description below, the process of storing optical information generated by the PC 8 is also referred to as recording.

The optical information is, for example, information in which temporal changes in optical signal intensity, which is the intensity of the signal light LS from the cell C, is shown as a waveform. This waveform corresponds to the morphology of cell C, and the optical information can be used to identify cell C. The optical information is used, for example, in machine learning as teaching data for learning the relationship between the morphology of target cells and waveform signals. Further, based on a prediction model created using optical information as teaching data, target cells can be identified using waveform signals when a sample containing specimens other than target cells is measured.

The PC 8 is an example of an information generation device that generates optical information indicating the morphology and structure of the observation target on the basis of the intensity of the optical signal detected by the detector.

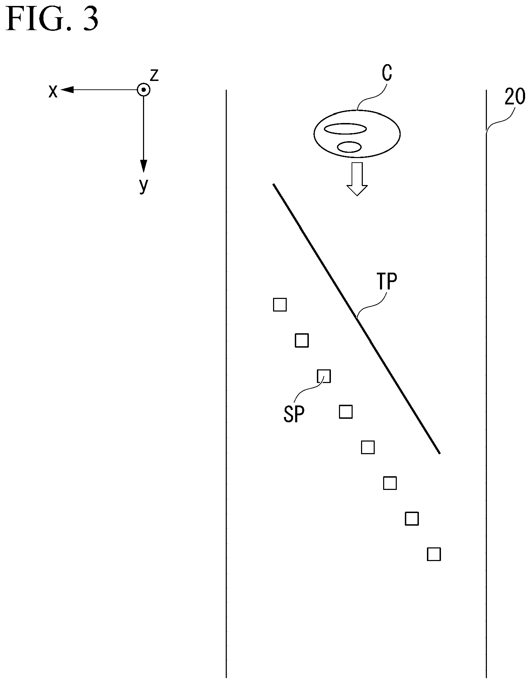

Next, an irradiation position which is a position in which the structured illumination light SLE is irradiated in the flow path 20 will be described with reference to FIG. 3. FIG. 3 is a diagram showing an example of the irradiation position of the structured illumination light SLE irradiated to the depth-direction position where the passage of the cell C is allowed according to this embodiment and is a cross-sectional view at the depth-direction position where the cell C is allowed to pass in the flow path 20 when viewed from the +z direction to the -z direction of the z-axis direction. In this embodiment, the illumination pattern of the structured illumination light SLE is disposed on the xy plane whose position in the z-axis direction is the depth to which the cell C moves. FIG. 3 shows an example in which the cell C corresponding to the observation target is irradiated with the structured illumination light SLE having a pattern composed of a plurality of squares in the cross-section (xy plane) at the depth to which the cell C moves in the flow path 20. Hereinafter, the cross-section (xy plane) whose position in the z-axis direction is the depth to which the cells C move in the flow path 20 is also referred to as the plane of the depth-direction position where the passage of the cell C is allowed.

The irradiation position of the flow path 20 includes an optical signal detection position SP and a trigger signal detection position TP. The optical signal detection position SP is a position in which the structured illumination light SLE is irradiated to acquire the optical information of the cell C and the signal light LS generated when the cell C passes through the optical signal detection position SP is detected by the photodetector 6. The trigger signal detection position TP is a position in which the PC 8 generates a recording trigger signal for starting the generation of the optical information as will be described later and the signal light generated when the cell C passing through the flow path 20 passes through the trigger signal detection position TP is detected by the photodetector 6.

The plurality of optical signal detection positions SP are arranged linearly at equal intervals in the width direction (the x-axis direction) of the flow path 20 on the plane of the depth-direction position where the passage of the cell C is allowed in the flow path 20. Accordingly, even when the cell C passes through any position in the width direction (the x-axis direction) of the flow path 20, a similar signal is always obtained regardless of the passing position. The optical signal detection positions SP are respectively referred to as SPi (i=1, 2,..., N: N is the number when the length in the width direction of the flow path 20 of the cell C is counted using the length of one side of the square of the optical signal detection position SP as a unit) in order in the width direction of the flow path 20.

In the optical signal detection positions SP, the adjacent optical signal detection positions are more preferably arranged without any gap in the width direction (the x-axis direction) of the flow path 20 on the plane of the depth-direction position where the passage of the cell C is allowed. With this arrangement, when the cell C passes through the optical signal detection position SP, each portion of the cell C extending in the width direction (the x-axis direction) of the flow path 20 can be detected without omission by the different optical signal detection positions SP.

As described above, in the structured illumination configuration, the spatial light modulation unit 4 is installed on the optical path between the light source 3 and the flow path 20 and the structured illumination light SLE which is structured to a specific illumination pattern by the modulation with spatial light modulation unit 4 is used. In the example of FIG. 3, the structured illumination light SLE irradiated to the irradiation position of the flow path 20 is irradiated as a pattern composed of a plurality of squares on the plane of the depth-direction position where the passage of the cell C is allowed and the shape of the structured illumination irradiated to the individual optical signal detection positions SP arranged in the flow path 20 is also square. Further, in all arranged optical signal detection positions SP, the length of one side of the square of the structured illumination irradiated to the optical signal detection position SP is the same. That is, in the example of FIG. 3, in the plane of the depth-direction position where the passage of the cell C is allowed, the shape of the minimum unit region that constitutes the structured illumination pattern at the irradiation position is a square and the flow path 20 is irradiated with the same type of structured illumination light SLE, which is composed of a plurality of squares with the same side length, at each optical signal detection position SP on the same plane. Here, the same type of structured illumination light SLE described above means that the structured illumination light SLE irradiated at each optical signal detection position SP is equivalent in quantity and quality and optical characteristics such as the wavelength, polarization state, and intensity of the irradiated light and the shape and size of the illumination range are the same at each optical signal detection position SP. Furthermore, in the description below, in the plane of the depth-direction position where the passage of the cell C is allowed, the individual region constituting the structured illumination pattern irradiated to each optical signal detection position SP (in the example of FIG. 3, each optical signal detection position SP is illustrated as a square) is described as structured illumination light irradiated to the optical signal detection position SP or structured illumination light of the optical signal detection position SP.

With the above-described configuration, each portion of the cell C is illuminated by the same type of structured illumination light SLE and is detected by a common method for each portion regardless of whether which portion of the cell C passes through which optical signal detection position SP.

As described above, the optical signal detection position SP is a position irradiated with the structured illumination light SLE to acquire the signal light LS for acquiring the optical information of the cell C on the plane of the depth-direction position where the passage of the cell C is allowed and the intensity of the signal light LS detected by the photodetector 6 is detected by a common method for each portion of the cell C. Here, the detection by the common method for each portion of the cell C is, as an example, a method in which the plurality of optical signal detection positions SP are respectively irradiated with the structured illumination lights SLE having the same shape and size which are similarly modulated by the spatial modulator 40 on the optical path and the photodetector 6 detects the signal light LS from each portion of the cell C passing through each optical signal detection position SP.

In the flow cytometer 1, since the plurality of optical signal detection positions SP are arranged linearly with an inclination with respect to the width direction of the flow path 20 on the plane of the depth-direction position where the passage of the cell C is allowed, the cell C pass through the optical signal detection positions SP arranged in the flow path 20 in such a manner that the portions of the cell C sequentially pass through the optical signal detection positions SP installed in the flow path 20 in the order of the spatial arrangement (in the +x direction of FIG. 3) of the portions constituting the cell C in the width direction of the flow path 20. Thus, in the flow cytometer 1, the spatial order of arrangement of the portions constituting the cell C in the width direction of the flow path 20 and the temporal order in which the portions of the cell C pass through the optical signal detection positions SP match.

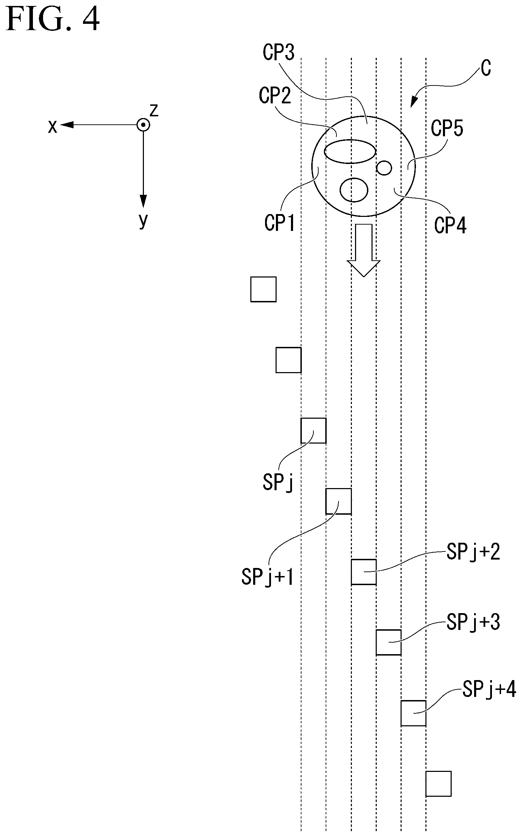

Here, the correspondence relationship between the portion constituting the cell C and the optical signal detection position SP through which the cell C passes when passing through the irradiation position of the flow path 20 will be described with reference to FIGS. 3 and 4. FIG. 4 is a diagram showing an example of the correspondence relationship between the optical signal detection position SP and the portion constituting the cell C according to this embodiment. FIG. 4 shows the correspondence relationship between the optical signal detection position SP and the portion constituting the cell C on the plane of the depth-direction position where the passage of the cell C is allowed.

The portions through which the cell C passes when passing through the optical signal detection positions SP at the irradiation position of the flow path 20 are referred to as the portions CPi (i=1, 2,..., N: N is the total number of the optical signal detection positions SP through which the cell C passes when passing through the irradiation position) in order of the width direction (the x-axis direction) of the flow path 20. FIG. 4 shows an example of a case in which N is 5 when the cell C passes through five optical signal detection positions SP. In FIG. 4, portions CP1, CP2, CP3, CP4, and CP5 of the cell C respectively pass through the optical signal detection positions SPj, SPj+1, SPj+2, SPj+3, and SPj+4 of the optical signal detection position SP.

The optical signal detection positions SP installed in the flow path 20 are set such that i=1, 2,..., M (M is the number of the optical signal detection positions SP installed at the irradiation positions) in order of the +x-axis. FIG. 4 shows an example in which M is 8 when eight optical signal detection positions SP are installed in the flow path 20. When the optical signal detection positions SP for detecting the portions CPi (i=1, 2,..., N) of the cell C in the optical signal detection position SP are the optical signal detection position SPj, the optical signal detection position SPj+1,..., the optical signal detection position SPj+N-1, the portion CP1, the portion CP2,..., the portion CPN of the cell C respectively pass through the optical signal detection position SPj, the optical signal detection position SPj+1,..., the optical signal detection position SPj+N-1 according to this temporal order. In FIG. 4, the portions CP1, CP2, CP3, CP4, and CP5 of the cell C respectively pass through the optical signal detection positions SPj, SPj+1, SPj+2, SPj+3, and SPj+4 in this temporal order.

Further, since the temporal frequency of the acquired optical signal changes according to the size of the structured illumination light irradiated to the optical signal detection position SP, the optical signal intensity can change periodically according to the size of the structured illumination light at the optical signal detection position SP with respect to the positional deviation of the streamline when the ratio to the size of the cell C is larger than a predetermined value. Therefore, the size of the structured illumination light at the optical signal detection position SP is more preferably 1/10 or less the size of the cell C on the same plane of the flow path 20 in which the structured illumination pattern is arranged and hence the structured illumination lights at the individual optical signal detection positions SP can be arranged to be sufficiently smaller than the size of the observation target (the cell C in this example) at high density. Considering the size of a normal cell, the shape of the structured illumination light at each optical signal detection position SP is, for example, a square with a side length of several microns or less on the plane of the depth-direction position where the passage of the cell C is allowed in the flow path 20.

In this way, in the flow cytometer 1, the correspondence relationship between the spatial order of the portions constituting the cell C passing through the optical signal detection positions SP and the temporal order when these portions pass through the optical signal detection positions SP does not change in the width direction of the flow path 20. Further, even when the cell C passes through any of the optical signal detection positions SP of the flow path 20, the timing at which the optical signal is generated due to the passage of the cell C does not change. That is, since the portions of the cell C are irradiated with structured illumination at the optical signal detection positions SP in the spatial order of the plurality of optical signal detection positions SP arranged in the flow path 20 in the width direction of the flow path 20 even when the cell C deviates to any position in the width direction of the flow path 20 and passes through the optical signal detection position SP, the correspondence relationship between the temporal order of the detection of the signal light LS emitted from each portion of the cell C and the spatial order of each portion of the cell C with respect to the width direction of the flow path 20 does not change. Further, in the flow cytometer 1, the optical signal detection positions SP are respectively illuminated by the same type of structured illumination light SLE and the plurality of optical signal detection positions SP are arranged linearly at equal intervals in the width direction of the flow path 20 at high density. With this configuration, temporal changes in the intensity of the optical signal for each portion of the cell C detected at the optical signal detection positions SP do not change even when the cell C passes through any position in the width direction of the flow path 20.

That is, in the flow cytometer 1, even when the position of the observation target flowing together with the fluid flowing through the flow path deviates in the width direction of the flow path, there is no temporal change in the intensity of the detected optical signal. In the description below, the positional deviation of the observation target flowing together with the fluid flowing through the flow path with respect to the flow path is referred to as the positional deviation of the streamline. The positional deviation of the streamline includes the positional deviation in the width direction in which the position of the observation target deviates in the width direction of the flow path and the positional deviation in the depth direction in which the position of the observation target deviates in the depth direction of the flow path. Further, the positional deviation of the observation target in the depth direction may occur at the same time as the positional deviation in the depth direction of the flow path. In the description below, at least one direction of the depth direction of the flow path and the width direction of the flow path is also referred to as a predetermined direction of the flow path.

In the flow cytometer 1, the optical signal detection position SPi and the optical signal detection position SPi+1 which are adjacent to each other are arranged without any gap in the width direction (the x-axis direction) of the flow path 20 on the plane of the depth-direction position where the passage of the cell C is allowed. Here, when there is a gap between the optical signal detection position SPi and the optical signal detection position SPi+1 which are adjacent to each other, a part of the cell C cannot be detected if a part of the cell C passes through this gap. Therefore, the optical signal detection position SPi and the optical signal detection position SPi+1 which are adjacent to each other are preferably arranged without a gap in the width direction of the flow path 20.

As described above, the optical signal detection positions SP are arranged without any gap in the width direction of the flow path 20. The optical signal detection positions SP located at both ends among the optical signal detection positions SP are respectively arranged at predetermined intervals from the wall of the flow path 20. In that case, it is preferable to control the cell C so that the cell flows in the vicinity of the center of the width direction (the x-axis direction) of the flow path 20. For example, the cell C flows in the vicinity of the center by generating the fluid flow from both side surfaces toward the center in the width direction (the x-axis direction) of the flow path 20. Additionally, each of the optical signal detection positions SP located at both ends among the optical signal detection positions SP may be disposed without any gap from the wall of the flow path 20.

In the flow cytometer 1, the individual optical signal detection positions SP are arranged not to overlap each other in the length direction (the y-axis direction) of the flow path 20 on the plane of the depth-direction position where the passage of the cell C is allowed. That is, the optical signal detection positions SP are arranged linearly with an inclination with respect to the width direction (x-axis direction) of the flow path 20 and they are arranged not to overlap each other in the length direction (the y-axis direction) of the flow path 20. When there are the optical signal detection positions SP arranged to overlap each other in the length direction (the y-axis direction) of the flow path 20 among the optical signal detection positions SP, the times for detecting the cell C at these optical signal detection positions SP are overlapped, and the intensity of the detected optical signals cannot be separated by the measurement time.

In this embodiment, since the individual optical signal detection positions SP are arranged not to overlap each other in the length direction (the y-axis direction) of the flow path 20 on the plane of the depth-direction position where the passage of the cell C is allowed, the cells C are detected at different times in different portions detected at different optical signal detection positions SP in the width direction (the x-axis direction) of the flow path 20.

Further, in order to sufficiently separately detect the intensity of the optical signal for each detected portion in terms of time, it is more preferable that the individual optical signal detection positions SP be separated from each other by a length approximately equal to the size of the cell C in the length direction (the y-axis direction) of the flow path 20.

Additionally, as described above, in this embodiment, an example of a case in which the photodetector 6 is PMT has been described, but the present invention is not limited thereto. The photodetector 6 may be a multi-anode electron multiplier as another example. When the photodetector 6 is the multi-anode electron multiplier, the optical signal detection positions SPi may be arranged to overlap each other in the length direction (the y-axis direction) of the flow path 20.

Since the multi-anode electron multiplier has a plurality of channels that detect a plurality of optical signals, the plurality of channels can respectively correspond to the plurality of optical signal detection positions SP. Therefore, even when the optical signal detection positions SP are arranged to overlap each other in the length direction (the y-axis direction) of the flow path 20, each of the optical signals generated when the portions of the plurality of cells C respectively pass through the plurality of optical signal detection positions SP at the same time can be simultaneously detected by the plurality of channels of the multi-anode electron multiplier.

The plurality of trigger signal detection positions TP are arranged on the upstream side of the flow path 20 (the -y direction of the y-axis direction) in relation to the optical signal detection positions SP to be separated from the plurality of optical signal detection positions SP by the same predetermined distance in the length direction of the flow path 20 on the plane of the depth-direction position where the passage of the cell C is allowed in the flow path 20. That is, the trigger signal detection positions TP are arranged on a straight line parallel to the straight line along which the plurality of optical signal detection positions SP are arranged.

Since the cell C flows in the +y direction of the y-axis direction of the flow path 20, the cell C passes through the optical signal detection position SP after passing through the trigger signal detection position TP.

On the plane of the depth-direction position where the passage of the cell C is allowed, the plurality of trigger signal detection positions TP are arranged to be separated by the same predetermined distance in the length direction of the flow path 20 while respectively corresponding to the plurality of optical signal detection positions SP. Thereby, the time from the start of the generation of optical information to the detection of the optical signal is constant regardless of where the cell C flows in the width direction of the flow path 20.

The trigger signal detection position TP located at both ends among the trigger signal detection positions TP are respectively arranged at predetermined intervals from the wall of the flow path 20 on the plane of the depth-direction position where the passage of the cell C is allowed. In that case, it is preferable to control the cell C so that the cell flows in the vicinity of the center of the width direction (the x-axis direction) of the flow path 20. Additionally, each of the trigger signal detection positions TP located at both ends among the trigger signal detection positions TP may be disposed without any gap from the wall of the flow path 20.

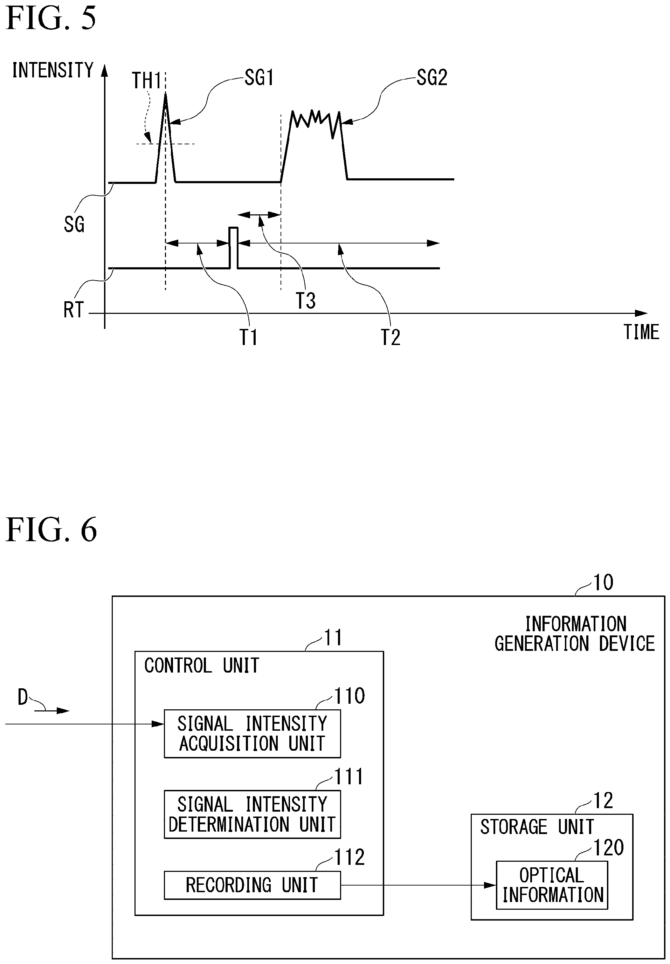

Here, a recording trigger signal RT and a measurement signal SG will be described with reference to FIG. 5. FIG. 5 is a diagram showing an example of temporal changes in optical signal intensity according to this embodiment. The measurement signal SG is a graph showing the intensity of the signal light LS detected by the photodetector 6 for each time and is information showing temporal changes in optical signal intensity as an electric signal waveform. The recording trigger signal RT is a graph showing the intensity of the signal indicating the start of recording over time.

As shown in FIG. 5, the measurement signal SG includes a first signal SG1 and a second signal SG2.

The first signal SG1 is an electrical signal waveform corresponding to the optical signal detected by the cell C passing through the trigger signal detection position TP.

In FIG. 5, since the first signal SG1 exceeds a trigger threshold TH1, the corresponding recording trigger signal RT rises in a pulse shape. Here, when the first signal SG1 exceeds the trigger threshold TH1, the recording trigger signal RT rises in a pulse shape when a pre-recording start time T1 elapses since the first signal SG1 is detected. The pre-recording start time T1 is a predetermined time set in advance. When the recording trigger signal RT rises in a pulse shape, the PC 8 starts recording.

The second signal SG2 is an electrical signal waveform corresponding to the optical signal detected by the cell C passing through the optical signal detection positions SP. In the second signal SG2, a plurality of peaks are observed corresponding to the fact that the cell C is detected at different times by different optical signal detection positions SP for each portion in the width direction (x-axis direction) of the flow path 20. The time from the recording start time to the detection of the optical signal at the optical signal detection position SP is referred to as a pre-signal detection time T3.

The PC 8 ends the recording when a recording time T2 elapses after the recording starts. The recording time T2 is a predetermined time set in advance in accordance with the flow velocity of the fluid flowing through the flow path 20, the distance from the trigger signal detection position TP to the optical signal detection position SP, the arrangement position of the optical signal detection position SP in the flow path 20, and the size of the cell C.

As described above, in the flow cytometer 1, the plurality of trigger signal detection positions TP and the plurality of optical signal detection positions SP are arranged in parallel in the flow path 20 on the plane of the depth-direction position where the passage of the cell C is allowed. Therefore, even when the cell C flows through any position in the width direction of the flow path 20, the time from the detection of the first signal SG1 to the detection of the second signal SG2 is constant under the condition that the flow velocity and the size of the cell C are constant and hence the pre-signal detection time T3 can be kept constant.

Further, in the flow cytometer 1, the recording time T2 is set in accordance with the arrangement position of the optical signal detection positions SP installed in the flow path 20 under the condition that the flow velocity and the size of the cell C are constant. Therefore, the recording time T2 can be kept constant even when the cell C flows through any position in the width direction of the flow path 20.

Next, the configuration of the PC 8 will be described as the configuration of an information generation device 10 with reference to FIG. 6. FIG. 6 is a diagram showing an example of a configuration of the information generation device 10 according to this embodiment. The information generation device 10 includes a control unit 11 and a storage unit 12.

The control unit 11 includes, for example, a central processing unit (CPU), a graphics processing unit (GPU), a field-programmable gate array (FPGA), and the like and performs various calculations and exchanges of information. The control unit 11 includes a signal intensity acquisition unit 110, a signal intensity determination unit 111, and a recording unit 112. Each of the signal intensity acquisition unit 110, the signal intensity determination unit 111, and the recording unit 112, is, for example, a module implemented by a CPU reading a program from a read only memory (ROM) and performing a process.

The signal intensity acquisition unit 110 acquires electronic data D output from the DAQ device 7.

The signal intensity determination unit 111 determines whether or not the intensity of the optical signal detected by the photodetector 6 is equal to or larger than the trigger threshold TH1 on the basis of the electrical signal waveform indicated by the electronic data D acquired by the signal intensity acquisition unit 110.

The recording unit 112 performs recording. Here, the recording is a process of storing the optical information as described above and is more specifically storing the electrical signal waveform composed of a combination of the intensity of the electrical signal and the time included in the electronic data D in the storage unit 12 as optical information 120. The recording unit 112 performs recording when the signal intensity determination unit 111 determines that the intensity of the optical signal detected by the photodetector 6 is equal to or larger than the trigger threshold TH1.

The storage unit 12 stores the optical information 120. The storage unit 12 is configured using a storage device such as a magnetic hard disk device or a semiconductor storage device.

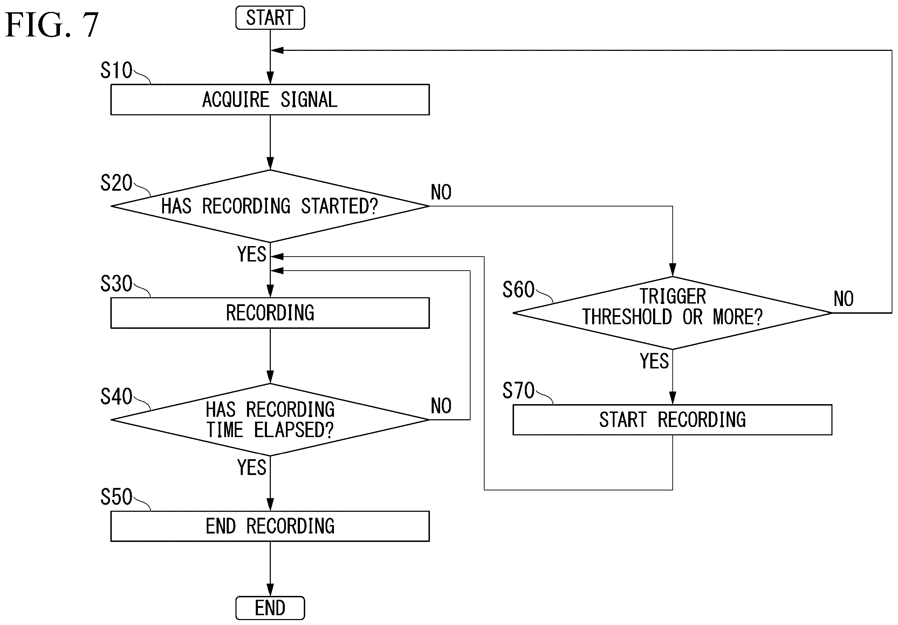

Next, a recording process of the information generation device 10 will be described with reference to FIG. 7. FIG. 7 is a diagram showing an example of the recording process according to this embodiment. Additionally, the process shown here is an example, and the process may be omitted or added.

Step S10: The signal intensity acquisition unit 110 acquires the electronic data D output from the DAQ device 7. The signal intensity acquisition unit 110 supplies the acquired electronic data D to the signal intensity determination unit 111 and the recording unit 112.

Step S20: The recording unit 112 determines whether or not the recording has started. When the recording unit 112 determines that the recording has started (step S20; YES), the process of step S30 is performed. On the other hand, when the recording unit 112 determines that the recording has not started (step S20; NO), the signal intensity determination unit 111 performs the process of step S60.

Step S30: The recording unit 112 performs recording. That is, the recording unit 112 stores the electrical signal waveform indicated by the electronic data D acquired by the signal intensity acquisition unit 110 in the storage unit 12 as the optical information 120.

Step S40: The recording unit 112 determines whether or not the recording time T2 has elapsed. When the recording unit 112 determines that the recording time T2 has elapsed (step S40; YES), the process of step S50 is performed. On the other hand, when the recording unit 112 determines that the recording time T2 has not elapsed (step S40; NO), the process of step 30 is performed again. That is, the recording unit 112 continues the recording.

Step S50: The recording unit 112 ends the recording. Then, the information generation device 10 ends the recording process.

Step S60: The signal intensity determination unit 111 determines whether or not the intensity of the optical signal detected by the photodetector 6 is equal to or larger than the trigger threshold TH1 on the basis of the intensity of the electrical signal indicated by the electronic data D acquired by the signal intensity acquisition unit 110.

When the signal intensity determination unit 111 determines that the intensity of the optical signal is equal to or larger than the trigger threshold TH1 (step S60; YES), the recording unit 112 performs the process of step S70. On the other hand, when the signal intensity determination unit 111 determines that the intensity of the optical signal is smaller than the trigger threshold TH1 (step S60; NO), the signal intensity acquisition unit 110 performs the process of step S10 again. That is, the signal intensity acquisition unit 110 continues the acquisition of the signal.

Step S70: The recording unit 112 starts the recording and performs the process of step 30. That is, the recording using the recording unit 112 is performed.

Furthermore, in this embodiment, a case in which the number of rows of the optical signal detection positions SP arranged linearly at equal intervals in the width direction of the flow path 20 in the flow path 20 is one has been described, but the present invention is not limited thereto. In the flow cytometer 1, the number of rows of the optical signal detection positions SP arranged linearly at equal intervals in the width direction of the flow path 20 on the plane of the depth-direction position where the passage of the cell C is allowed in the flow path 20 may be two or more.

As described above, the flow cytometer 1 according to this embodiment includes the microfluidic device 2 including the flow path 20 through which the observation target (in this example, the cell C) can flow together with the fluid, the photodetector 6 detecting the intensity of the optical signal (in this example, the signal light LS is the light collected by the light detection optical system 5) in time series, and the information generation device 10 (in this example, the PC 8). The information generation device 10 generates the optical information 120 indicating the morphology and structure of the observation target (in this example, the cell C) on the basis of temporal changes in the intensity of the optical signal detected by the photodetector 6.

In the flow cytometer 1, since the intensity of the optical signal detected by the photodetector 6 is detected by a common method for each portion of the observation target (in this example, the cell C), the plurality of optical signal detection positions SP are arranged linearly at equal intervals in the width direction of the flow path 20 on the plane of the depth-direction position where the passage of the cell C is allowed in the flow path 20 provided in the microfluidic device 2 and each optical signal detection position SP is illuminated by the same type of light structured by the spatial light modulation unit 4. Further, in the flow cytometer 1, the trigger signal detection positions TP for detecting the recording trigger signal by which the information generation device 10 starts the generation of the optical information 120 are arranged to be separated by the same predetermined distance in the length direction of the flow path 20 while respectively corresponding to the plurality of optical signal detection positions SP.

With this configuration, in the flow cytometer 1 according to this embodiment, the plurality of optical signal detection positions SP arranged linearly with an inclination with respect to the width direction of the flow path 20 are irradiated with structured illumination. Thereby, even when the positional deviation occurs in the width direction of the streamline through which the cell C flows in the flow path 20, the correspondence relationship between the spatial order and the temporal order stay unchanged all the time and robust measurement against the positional deviation of the streamline is performed compared to a case in which irradiation positions of the flow path 20 are entirely irradiated by structured illumination with a random pattern. Here, the robust measurement against the positional deviation of the streamline means that variations in measurement result can be suppressed and measurement can be performed with good reproducibility and high accuracy even when the position of the streamline of the observation target deviates.

Further, in the flow cytometer 1 according to this embodiment, the plurality of trigger signal detection positions TP are arranged in parallel to the optical signal detection position SP on the plane of the depth-direction position where the passage of the cell C is allowed. Thereby, even when the cell C flows through any position in the width direction of the flow path 20, the pre-signal detection time T3 which is a time from the recording start time to the detection of the optical signal of the cell C at the optical signal detection position SP and the recording time T2 can be kept constant. Accordingly, in the flow cytometer 1 according to this embodiment, it is possible to set the measurement time per cell to the minimum necessary length without missing the optical signal from the cell C passing through the flow path 20 and to achieve the robust measurement against the positional deviation of the streamline in the width direction and the high-speed measurement at the same time. That is, in the flow cytometer 1 according to this embodiment, it is possible to realize the high-speed measurement while ensuring the reproducibility of the data with respect to the positional deviation in the width direction of the streamline.

Further, in the flow cytometer 1 according to this embodiment, the plurality of optical signal detection positions SP are arranged linearly with an inclination with respect to the width direction of the flow path 20 and are also arranged not to overlap each other in the length direction of the flow path 20 on the plane of the depth-direction position where the passage of the cell C is allowed.

With this configuration, in the flow cytometer 1 according to this embodiment, since the times for passing through the optical signal detection position SP for each portion of the cell C are sufficiently separated without overlapping, the intensity of the optical signal for each portion of the cell C to be detected can also be temporally separated without mixing with each other.

Further, in the flow cytometer 1 according to this embodiment, the plurality of optical signal detection positions SP are arranged without any gap in the width direction of the flow path 20 on the plane of the depth-direction position where the passage of the cell C is allowed.

With this configuration, in the flow cytometer 1 according to this embodiment, since each portion of the cell C passes through any one of the plurality of optical signal detection positions SP, it is possible to suppress generation of portions that fail to be detected in the cell C.

Further, in the flow cytometer 1 according to this embodiment, the trigger signal detection position TP is disposed on the upstream side of the flow path 20 in relation to the optical signal detection position SP.

With this configuration, in the flow cytometer 1 according to this embodiment, since the cell C passes through the optical signal detection position SP after passing through the trigger signal detection position TP, it is possible to reliably and stably acquire the optical information 120 by the optical signal detection position SP even when the cell C flows to any position of the flow path 20 in the width direction.

Additionally, the plurality of trigger signal detection positions TP may be arranged on the downstream side of the flow path (in the -y direction of the y-axis direction) in relation to the optical signal detection position SP. When the plurality of trigger signal detection positions TP are arranged on the downstream side of the flow path in relation to the optical signal detection position SP, the information generation device generates the optical information even before the recording starts and temporarily stores the generated optical information in the storage unit. In that case, when the cells are detected at the plurality of individual optical signal detection positions SP and the intensity of the optical signal detected by the photodetector is equal to or larger than the trigger threshold, the information generation device deletes the optical information which is stored prior to a predetermined time from the time when such optical signal is detected from the optical information stored in the storage unit.

Further, in the flow cytometer 1 according to this embodiment, the plurality of optical signal detection positions SP are respectively irradiated with the same type of structured light (structured illumination light SLE in this example). Furthermore, in the flow cytometer 1 according to this embodiment, the size of the structured illumination light irradiated to the individual optical signal detection position SP in the flow path 20 is set to be sufficiently smaller than the size of the cell C corresponding to the observation target and the plurality of optical signal detection positions SP irradiated with structured illumination light are arranged linearly at equal intervals in the width direction of the flow path 20 at high density on the plane of the depth-direction position where the passage of the cell C is allowed.

With this configuration, in the flow cytometer 1 according to this embodiment, since detected data is robust against the positional deviation in the width direction of streamline, reproducibility of measurement result can be ensured. That is, in the flow cytometer 1 according to this embodiment, even when the positional deviation of the streamline occurs in the observation target in the width direction, variations in measurement result can be suppressed, and highly accurate measurement can be performed with good reproducibility.

### (First modified example of first embodiment)

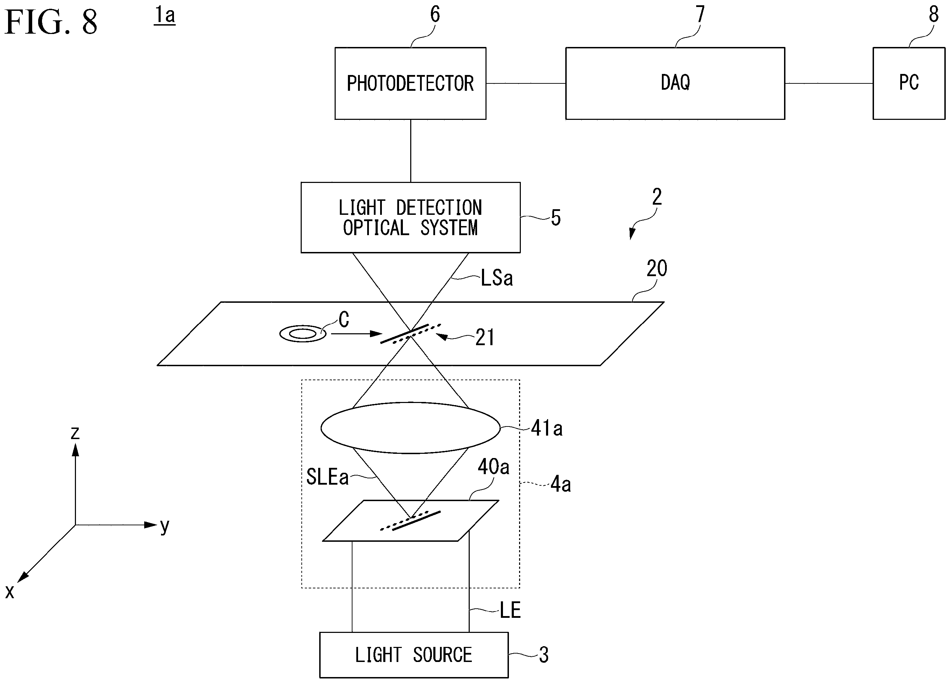

Additionally, in the description above, an example of a case in which the illumination light LE is structured by the spatial modulator 40 has been described, but the present invention is not limited thereto. Instead of the spatial light modulator, the spatial light modulation unit may be a spatial filter having a light transmission region that transmits light and a light non-transmission region that does not transmit light. The above-described spatial filter is, for example, a spatial filter with a plurality of light transmission regions having the same shape and size, and the illumination light LE from the light source is transmitted through the light transmission region of the spatial filter to be converted into the structured illumination light SLE. A flow cytometer 1a according to a first modified example of the flow cytometer will be described with reference to FIG. 8. FIG. 8 is a diagram showing an example of the flow cytometer 1a according to the first modified example of this embodiment.

The configuration of the flow cytometer 1a (FIG. 8) is the same as the configuration of the flow cytometer 1 (FIG. 1) except that a spatial light modulation unit 4a is provided instead of the spatial light modulation unit 4.

The spatial light modulation unit 4a includes a mask 40a and a first lens 41a. The mask 40a and the first lens 41a are arranged on the optical path between the light source 3 and the photodetector 6 in this order from the side closer to the light source 3. The mask 40a is a spatial filter including apertures allowing light to pass therethrough and the rest of the region blocking light from the light source 3 as an example of the spatial filter, and the apertures constitute a light transmission region which transmits the illumination light LE from the light source 3.

The light transmission region of the mask 40a corresponds to the structured illumination pattern 21 irradiated in the flow path 20. The illumination light LE from the light source 3 is transmitted through the light transmission region of the mask 40a to generate structured illumination light SLEa. In this modified example, the illumination light LE is structured by the mask 40a and the structured illumination pattern 21 is generated by the light transmission region of the mask 40a.

The first lens 41a collects the structured illumination light SLEa generated by the mask 40a and forms an image at the irradiation position on the flow path 20. Here, the light transmission region on the mask 40a and the structured illumination pattern 21 on the flow path 20 are at conjugate positions with respect to the first lens 41a.

Additionally, the structured illumination light SLEa is preferably imaged at the irradiation position on the flow path 20 by the first lens 41a, but it is not necessary to form an image at the irradiation position on the flow path 20. When the structured illumination light SLEa does not form an image at the irradiation position on the flow path 20, the mask 40a is provided right below the flow path 20 on the optical path between the light source 3 and the photodetector 6. Here, the position right below the flow path 20 is the vicinity on the side of the light source 3 in the flow path 20. Additionally, when the structured illumination light SLEa does not form an image at the irradiation position on the flow path 20, the first lens 41a is omitted from the configuration of the spatial light modulation unit 4a.

Additionally, the spatial light modulation unit 4a may include a mirror 42a (not shown) instead of the mask 40a as another example. The mirror 42a is a spatial filter having a light transmission region which transmits light in a straight direction and a light reflection region which reflects light in a predetermined direction. In this example, the light reflection region of the mirror 42a corresponds to the optical signal detection position SP. When the spatial light modulation unit 4a includes the mirror 42a, the light source 3 is provided on the side of the flow path 20 with respect to the mirror 42a. The illumination light LE from the light source 3 is converted into the structured illumination light SLE through the mirror 42a, but at this time, the structured illumination light SLE reflected by the light reflection region of the mirror 42a is irradiated to the irradiation position of the flow path 20. In this example, the structured illumination pattern 21 is generated by the light reflection region of the mirror 42a.

### (Second modified example of first embodiment)

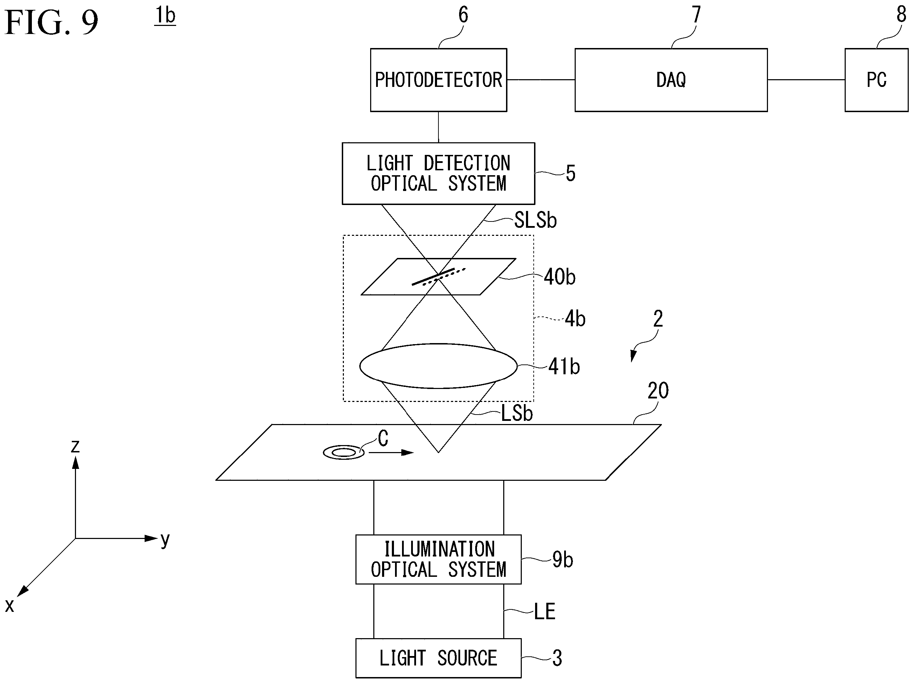

In the description above, a configuration in which the spatial light modulation unit 4 is disposed on the optical path between the light source and the flow path and modulates the illumination light LE has been described, but the present invention is not limited thereto. A flow cytometer 1b according to another modified example of the flow cytometer will be described with reference to FIG. 9. FIG. 9 is a diagram showing an example of the flow cytometer 1b according to a second modified example of this embodiment.

The configuration of the flow cytometer 1b (FIG. 9) is the same as the configuration of the flow cytometer 1 (FIG. 1) except that an illumination optical system 9b and a spatial light modulation unit 4b are provided instead of the spatial light modulation unit 4. The spatial light modulation unit 4b includes a first lens 41b and a mask 40b. The first lens 41b and the mask 40b are arranged on the optical path between the flow path 20 and the photodetector 6 in this order from the side closer to the flow path 20. The mask 40b is a spatial filter having a light transmission region which has apertures and a light non-transmission region where light is blocked.

The mask 40b is provided at a position in front of the light detection optical system 5 and the photodetector 6 on the optical path from the flow path 20 to the photodetector 6. That is, the signal light LSb from the cell C is detected by the photodetector 6 through the mask 40b and the light detection optical system 5. As in the configuration of FIG. 9, a configuration in which the mask 40b is provided at a position between the flow path 20 and the photodetector 6 on the optical path from the light source 3 to the photodetector 6 is also referred to as a structured detection configuration.

The illumination light LE from the light source 3 illuminates the cell C flowing in the flow path 20 through the illumination optical system 9b. The illumination optical system 9b is a mechanism for uniformly illuminating the flow path 20 in which a lens is included. Further, slits, mirrors, and other optical elements for light shaping may also be included.

As described above, the spatial light modulation unit 4b includes the first lens 41b and the mask 40b. The first lens 41b and the mask 40b are arranged in this order from the side closer to the flow path 20, and the first lens 41b collects the signal light LSb from the cell C and forms an image on the mask 40b.

The signal light LSb from the cell C is structured by passing through the plurality of light transmission regions of the mask 40b and is converted into structured signal light SLSb. Here, the light transmission regions on the mask 40b and the positions where the cell C is illuminated by the illumination light LE on the flow path 20 are at conjugate positions with respect to the first lens 41b.

The structured signal light SLSb structured by the mask 40b is imaged by the light detection optical system 5 and is detected by the photodetector 6. In the structured detection, the signal light LSb from the cell C passing through the positions on the flow path 20 that are conjugate through the first lens 41b to the light transmission regions of the mask 40b is transmitted through the plurality of light transmission regions of the mask 40b and is detected in time series by the photodetector 6 through the light detection optical system 5 as the structured signal light SLSb. FIG. 9 shows an example in which the plurality of light transmission regions of the mask 40b are arranged in a straight line with a plurality of squares.

Because of the structured detection configuration, the function of the optical signal detection position SP in the flow path 20 of the flow cytometer 1 of the first embodiment is exhibited similarly in the flow cytometer 1b. In the structured detection configuration, the plurality of light transmission regions of the mask 40b are arranged at positions conjugate through the first lens 41b with the irradiation position of the illumination light LE in the flow path 20. Therefore, in the flow cytometer 1b, from which positions of the flow path 20 the signal light LSb emitted from the cell C passing through the flow path 20 is acquired can be set by the arrangement of the light transmission regions of the mask 40b. In the example of FIG. 9, the arrangement position of the light transmission regions of the mask 40b is provided so that the positions for acquiring the signal light LSb emitted from the cell C in the flow path 20 are the same as the optical signal detection positions SP of the flow cytometer 1 of the first embodiment. With this configuration, in the flow cytometer 1b, the signal light LSb from the cell C emitted from the position corresponding to the plurality of optical signal detection positions SP in the flow cytometer 1 of the first embodiment on the flow path 20 can be detected in time series by the photodetector 6 as the intensity of the structured signal light SLSb transmitted through the light transmission regions of the mask 40b.

In the flow cytometer 1b, it is preferable that the individual shape and size of the light transmission regions of the mask 40b be the same. Accordingly, each portion of the cell C passing through the flow path 20 can be detected as the same type of structured signal light SLSb. Here, the same type of structured signal light SLSb means that the structured signal light SLSb structured through the individual light transmission regions installed in the mask 40b is equal in both quantity and quality when the light (for example, the signal light LSb) irradiated to the mask 40b is the same. Further, the size of each light transmission region of the mask 40b is preferably set sufficiently smaller than the size of the image of the observation target (in this example, the cell C) at the position of the mask 40b. Furthermore, the plurality of light transmission regions of the mask 40b are preferably arranged to acquire the signal light LSb from the cell C passing through the positions arranged linearly at equal intervals in the width direction (the x-axis direction) of the flow path 20 in the lateral direction of the flow path 20. In other words, the plurality of light transmission regions of the mask 40b are preferably arranged to acquire the signal light LSb from the cell C passing through the positions in which the optical signal detection positions SP are arranged linearly at equal intervals in FIG. 3 on the plane of the depth-direction position where the passage of the cell C is allowed. With the above-described configuration, in the flow cytometer 1b, as in the case of the forementioned structured illumination, there are no temporal changes in the intensity of the optical signal from the detected cell C even when the cell C deviates to any position in the width direction of the flow path 20 and passes through the irradiation position of the flow path 20 on the plane of the depth-direction position where the passage of the cell C is allowed.

In order to set the trigger signal detection position TP in the flow path 20, the mask 40b included in the flow cytometer 1b is provided with light transmission regions different from the light transmission regions for transmitting light emitted from the positions corresponding to the optical signal detection positions SP. In the configuration of the structured detection, as described above, the arrangement of the light transmission regions of the mask 40b can set from which positions of the flow path 20 the signal light is detected from the cell C passing through flow path 20. In the mask 40b included in the flow cytometer 1b, the light transmission regions of the mask 40b are arranged to acquire the signal light LSb emitted when the cell C passes through the position provided with the trigger signal detection position TP in the flow cytometer 1 of the first embodiment. With this configuration, the flow cytometer 1b can also appropriately generate the recording trigger signal for starting the generation of morphological information on the cell C which is the observation target.

Additionally, the spatial light modulation unit 4b may include a mirror 42b (not shown) which functions as a spatial filter instead of the mask 40b. The mirror 42b is a spatial filter having light transmission regions transmitting light and light non-transmission regions not transmitting light by reflecting the light. Here, when the spatial light modulation unit 4b includes the mirror 42b, the region of the mirror 42b that reflects the light corresponds to the optical signal detection position SP, as in the case of the mirror 42a.

The spatial light modulation unit 4b (FIG. 9) and the spatial light modulation unit 4 (FIG. 1) transmit different types of light in the light transmission regions other than being installed on the photodetector 6 side or on the light source 3 side with respect to the flow path 20. The spatial light modulation unit 4 (FIG. 1) transmits the illumination light LE to form the structured illumination light SLE, but the spatial light modulation unit 4b (FIG. 9) structures the signal light LSb such as fluorescence, transmitted light, scattered light, and interference light from the cells C into the structured signal light SLSb. The spatial light modulation unit 4b (FIG. 9) and the spatial light modulation unit 4 (FIG. 1) are different in the type of light by which they are irradiated but have the same function of structuring the light.

Additionally, in the first embodiment and the modified example, an example of a case in which the irradiation position or the detection position including the optical signal detection position SP and the trigger signal detection position TP is set by one spatial light modulation unit has been described, but the present invention is not limited thereto. For example, the optical signal detection position SP may be set by the structured illumination configuration using the spatial light modulation unit 4 (FIG. 1) and the trigger signal detection position TP may be set by the structured detection configuration using the spatial light modulation unit 4b. In contrast, the trigger signal detection position TP may be set by the structured illumination configuration using the spatial light modulation unit 4 (FIG. 1) and the optical signal detection position SP may be set by the structured detection configuration using the spatial light modulation unit 4b. In the above case, the wavelength of light used to set the optical signal detection position SP and the wavelength of light used to set the trigger signal detection position TP may be the same or different.

Additionally, the optical signal detection position SP may be set by the spatial light modulation unit 4 (FIG. 1) or the spatial light modulation unit 4b (FIG. 9) and the trigger signal detection position TP may be set by an optical system including at least a lens without a spatial light modulation unit and the like. In that case, the wavelength of light used to set the optical signal detection position SP and the wavelength of light used to set the trigger signal detection position TP may be the same or different.

In the flow cytometer 1b according to this modified example, the regions (in an example, the light transmission regions of the mask 40b) having the same shape and size of the spatial filter (in this example, the mask 40b) are installed at a position corresponding to the optical signal detection positions SP of the flow path 20 on the plane of the depth-direction position where the passage of the cell C is allowed, and the signal light (in this example, the signal light LSb) from the cell C is detected in time series by the photodetector 6 as the optical signal (in this example, the structured signal light SLSb) structured through these regions of the spatial filter.

In the flow cytometer 1b according to this embodiment, the portions of the cell C are detected as the intensity of the optical signal (in this example, the structured signal light SLSb) through the regions (in an example, the light transmission region of the mask 40b) having the same shape and size. With this configuration, as in the flow cytometer 1, it is possible to realize the high-speed measurement while ensuring the reproducibility of the data even when the positional deviation of the streamline occurs in the width direction.

### (Second embodiment)

Hereinafter, a second embodiment of the present invention will be described in detail with reference to the drawings.

In the first embodiment, a case in which the optical signal detection position and the trigger signal detection position are set to different positions has been described. In this embodiment, a case in which the trigger signal detection position is also served as the optical signal detection position will be described.

The flow cytometer according to this embodiment is referred to as a flow cytometer 1c, the flow path is referred to as a flow path 20c, and the information generation device is referred to as an information generation device 10c.

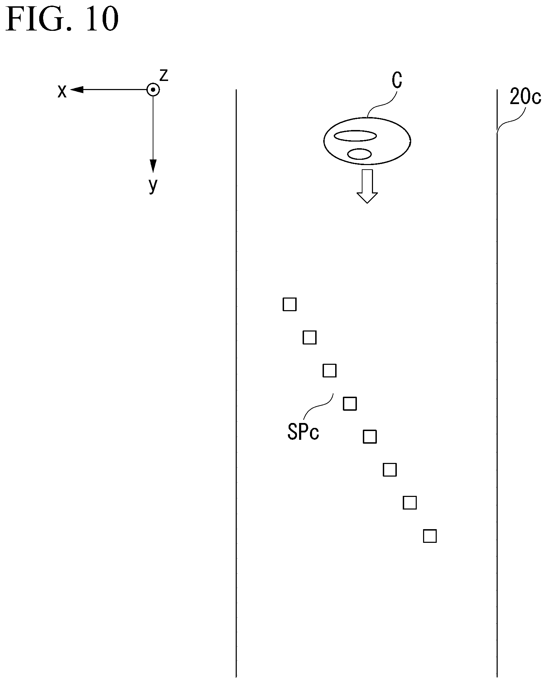

Referring to FIG. 10, the irradiation position which is a position in which the structured illumination light SLE is irradiated on the plane of the depth-direction position where the passage of the cell C is allowed in the flow path 20c will be described. FIG. 10 is a diagram showing an example of the irradiation position according to this embodiment.

In this embodiment, the irradiation position is an optical signal detection position SPc composed of a plurality of optical signal detection positions. Since the arrangement of the optical signal detection positions SPc in the flow path 20c (FIG. 10) is the same as the arrangement of the optical signal detection positions SP of the first embodiment (FIG. 3), the description is omitted.

The trigger signal detection position is also served as the plurality of optical signal detection positions SPc. That is, the plurality of optical signal detection positions SPc are also positions for the photodetector 6 to detect a trigger signal for the information generation device 10c to start the generation of the optical information.

In this embodiment, a recording unit 112c of the information generation device 10c generates optical information 120c even before the recording starts and temporarily stores the generated optical information 120c in a storage unit 12c. When the cell C is detected at the plurality of optical signal detection positions SPc and the intensity of the optical signal detected by the photodetector 6 is equal to or larger than the trigger threshold TH1, the recording unit 112c deletes the optical information 120c which is stored prior to the time when a predetermined time set as the time T1 elapses from the time when the intensity of the optical signal equal to or larger than the trigger threshold TH1 is detected from the optical information 120c temporarily stored in the storage unit 12c. Thereafter, the recording unit 112c stores the remaining optical information 120c in the storage unit 12 as the optical information indicating the morphology of the cell C.

FIG. 10 shows, as an example, a case in which the optical signal detection positions SPc (FIG. 10) are arranged on the plane of the depth-direction position where the passage of the cell C is allowed in the flow path 20 as in the arrangement of the first embodiment, but the present invention is not limited thereto. The second embodiment in which the trigger signal detection position is also served as the optical signal detection position can be implemented in combination with the configuration in which the spatial filter shown as the first modified example of the first embodiment is used. Further, the second embodiment can be implemented in combination with the structured detection configuration shown as the second modified example of the first embodiment.

As described above, in the flow cytometer 1c according to this embodiment, the trigger signal detection position is also served as the optical signal detection position SPc.

With this configuration, in the flow cytometer 1c according to this embodiment, since it is not necessary to set the trigger signal detection position separately from the optical signal detection position SPc, it is possible to simplify the configuration of the flow cytometer 1c.

### (Third embodiment)

Hereinafter, a third embodiment of the present invention will be described in detail with reference to the drawings.

In the first embodiment and the second embodiment, a case in which the optical information for identifying the cell on the basis of temporal changes in the intensity of the signal light from the cell has been described. In this embodiment, a case in which a desired cell is identified, and the identified cell is sorted will be described.

The flow cytometer may sort the cell on the basis of the generated optical information. In other words, the flow cytometer may sort the cell on the basis of the information indicating the morphology of the cell included in the optical information. The sorting is to sort a predetermined target (for example, a predetermined cell) from the observation target flowing through the flow path. This predetermined cell is selected, for example, by a user in advance.

Here, sorting will be described. For example, a predetermined cell as an observation target and a target different from the predetermined cell, such as dust or other cells, may flow through the flow path. Sorting is to select and extract a predetermined cell from the observation target.

That is, the flow cytometer performs sorting by determining whether or not the cell is the sorting target by comparing the information indicating the morphology of the cell selected in advance by the user with the optical information indicating the morphology of the cell.

A flow cytometer with a sorting function is referred to as a cell sorter. In the description below, the cell sorter according to this embodiment is referred to as a cell sorter 1d.

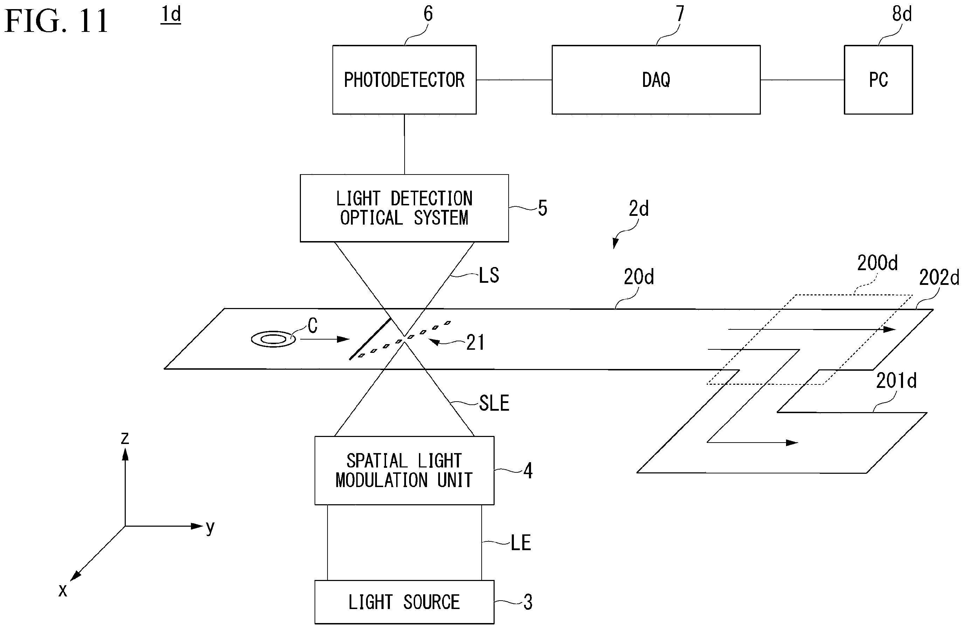

FIG. 11 is a diagram showing an example of the cell sorter 1d according to this embodiment. The cell sorter 1d includes a microfluidic device 2d, the light source 3, the spatial light modulation unit 4, the light detection optical system 5, the photodetector 6, the DAQ device 7, and a PC 8d.

Comparing the cell sorter 1d (FIG. 11) according to this embodiment with the flow cytometer 1 (FIG. 1) according to the first embodiment, the microfluidic device 2d and the PC 8d are different. Here, functions of other components (the light source 3, the spatial light modulation unit 4, the light detection optical system 5, the photodetector 6, and the DAQ device 7) are the same as in the first embodiment. The description of the same functions as those of the first embodiment will be omitted and the explanation in the third embodiment will focus on the portions that are different from those of the first embodiment.

The microfluidic device 2d includes a flow path 20d through which the cell C can flow together with a fluid. The flow path 20d includes a sorting unit 200d, a sorting route 201d, and a non-sorting route 202d.

The sorting unit 200d sorts the cells C. Here, the sorting unit 200d sorts the cells C by switching the route through which the cells C flow to either the sorting route 201d or the non-sorting route 202d. The sorting route 201d is a flow path through which the cell C flowing through the flow path 20d flows when the cell is a predetermined cell. On the other hand, the non-sorting route 202d is a flow path through which the cell C flowing through the flow path 20d flows when the cell is not a predetermined cell.

The PC 8d determines whether or not the cell C flowing through the flow path 20d is a predetermined cell on the basis of the optical information indicating the morphology of the cell C. The PC 8d outputs a command to the sorting unit 200d for switching the route through which the sorting unit 200d flow the cell C on the basis of the determination result.

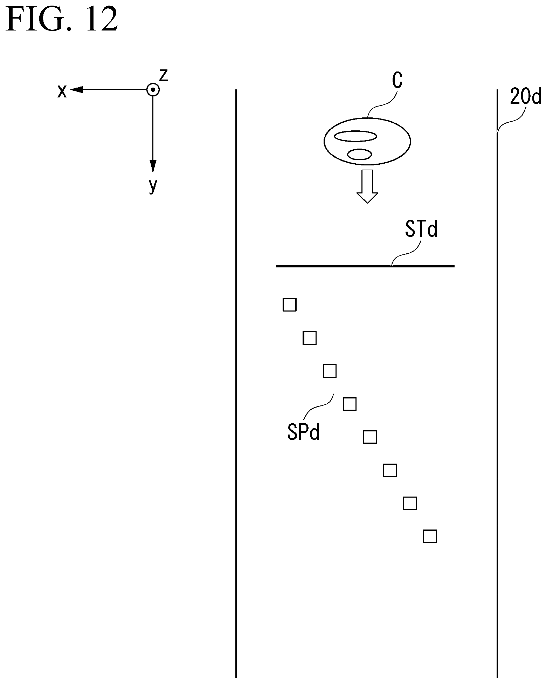

Next, a sorting trigger signal detection position STd of the flow path 20d will be described with reference to FIG. 12. FIG. 12 is a diagram showing an example of the sorting trigger signal detection position STd according to this embodiment. FIG. 12 shows an example of the sorting trigger signal detection position STd disposed on the plane of the depth-direction position where the passage of the cell C is allowed.

The sorting trigger signal detection position STd and an optical signal detection position SPd composed of the plurality of individual optical signal detection positions are disposed in the flow path 20d. FIG. 12 shows an example in which the optical signal detection position SPd is also served as the trigger signal detection position as in the optical signal detection position SPc described in the second embodiment (FIG. 10).

The sorting trigger signal detection position STd is a position for detecting a sorting trigger signal SL. The sorting trigger signal SL is a signal for determining when the sorting unit 200d sorts the cell C. The sorting unit 200d sorts the cell C, for example, at the timing at which a predetermined time elapses after the sorting trigger signal SL is detected.

In the example of FIG. 12, the sorting trigger signal detection positions STd are arranged linearly in the width direction (the x-axis direction) of the flow path 20d by the structured illumination light SLE irradiated to the flow path 20d on the plane of the depth-direction position where the passage of the cell C is allowed. That is, the sorting trigger signal detection positions STd are arranged on a line perpendicular to the direction (the y-axis direction) of the fluid flow flowing through the flow path 20. Since the sorting trigger signal detection positions STd are arranged on a line perpendicular to the direction of the fluid flow, the time at which the sorting trigger signal SL is detected by the sorting trigger signal detection position STd does not change even when the cell C flows to any position in the width direction (the x-axis direction) of the flow path 20d. Thus, since the sorting unit 200d is set to sort the cells C at a timing after a predetermined time elapses from the detection of the sorting trigger signal SL, the time until the cells C are sorted by the sorting unit 200d can be made constant in the cell sorter 1d.

In the example of FIG. 12, the sorting trigger signal detection position STd is disposed not to overlap the optical signal detection position SPd as an example. Further, the sorting trigger signal detection position STd is disposed on the upstream side of the flow path 20d (in the -y direction of the y-axis direction) in relation to the optical signal detection position SPd.

When the cell C passes through the sorting trigger signal detection position STd, the signal light LS is emitted from the cell C and the signal light LS emitted from the cell C is detected by the photodetector 6 as the sorting trigger signal SL.

Here, the wavelength of the structured illumination light SLE irradiated at the optical signal detection position SPd and the wavelength of the structured illumination light SLE irradiated at the sorting trigger signal detection position STd may be the same or different. Further, the wavelength of the signal light LS used for the detection at the optical signal detection position SPd and the wavelength of the signal light LS used at the sorting trigger signal SL may be the same or different.

When the wavelength of the structured illumination light SLE irradiated at the optical signal detection position SPd and the wavelength of the structured illumination light SLE irradiated at the sorting trigger signal detection position STd are different from each other, it is possible to use common illumination light LE modulated into different wavelengths in the course of structuring and to use different illumination light LE with different wavelengths.

When the common illumination light LE is used, for example, there is a method in which using the light source 3 with a spread in the wavelength range and differentiating the wavelength of light to be transmitted between the region corresponding to the optical signal detection position SPd and the region corresponding to the sorting trigger signal detection position STd in the spatial light modulation unit 4 shown in FIG. 11.

On the other hand, when the illumination lights LE having different wavelengths are used, as an example, a method of including two types of light sources 3 and two types of spatial light modulation units 4 respectively corresponding to the two types of light sources 3 is used for the structured illumination light SLE irradiated at the optical signal detection position SPd and the structured illumination light SLE irradiated at the sorting trigger signal detection position STd. In that case, the two types of light sources 3 irradiate the illumination lights LE having different wavelengths. Further, the two types of spatial light modulation units 4 respectively structure the illumination lights LE respectively irradiated from the two types of light sources 3.

Additionally, in this embodiment, an example of a case in which the sorting trigger signal detection position STd and the optical signal detection position SPd are arranged not to overlap each other on the plane of the depth-direction position where the passage of the cell C is allowed in the flow path 20d has been described, but the present invention is not limited thereto. For example, when the wavelength of the signal light LS used for the detection at the optical signal detection position SPd and the wavelength of the signal light LS used for the sorting trigger signal SL are different, the sorting trigger signal detection position STd and the optical signal detection position SPd may be arranged to overlap each other in the flow path 20d.

In this case, as an example, when the signal light LS is fluorescence, since the fluorescence is normally generated with a spread in the wavelength region, even if the fluorescence wavelength used for the detection at the optical signal detection position SPd and the fluorescence wavelength used for the sorting trigger signal SL are changed, they may affect each other. Therefore, in order to minimize mutual influence, it is preferable that the wavelength region of the fluorescence used for detection at the optical signal detection position SPd and the wavelength region of the fluorescence used for the sorting trigger signal SL do not overlap.

As a method for preventing the wavelength region of the fluorescence used for the detection at the optical signal detection position SPd from overlapping with the wavelength region of the fluorescence used for the sorting trigger signal SL, for example, there is a method of using fluorescence staining in which the fluorescence wavelength regions do not overlap between the fluorescence used for the detection at the optical signal detection position SPd and the fluorescence used for the sorting trigger signal SL.

Alternatively, as another method, one of the signal light LS used for the detection at the optical signal detection position SPd and the signal light LS used for the sorting trigger signal SL may be detected as fluorescence and the other as scattered light. In this case, wavelengths of light that generate scattered light on one side should be wavelengths that do not excite fluorescence on the other side.

Further, in this embodiment, an example of a case in which the sorting trigger signal detection position STd is disposed on the upstream side of the flow path 20d (the - y direction of the y-axis direction) in relation to the optical signal detection position SPd has been described, but the present invention is not limited thereto. The sorting trigger signal detection position STd may be disposed on the downstream side of the flow path 20d (the +y direction of the y-axis direction) in relation to the optical signal detection position SPd and on the upstream side of the flow path 20d (the -y direction of the y-axis direction) in relation to the sorting unit 200d.

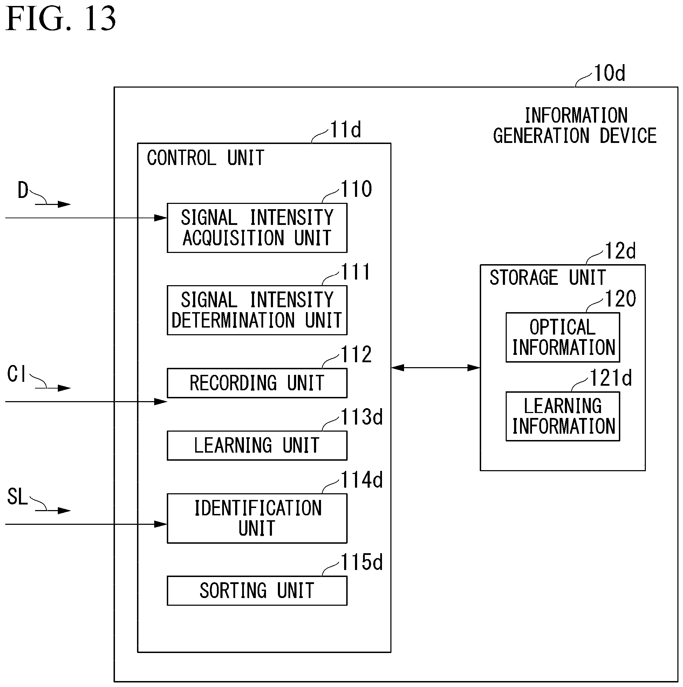

Next, the configuration of the PC 8d will be described as the configuration of the information generation device 10d with reference to FIG. 13. FIG. 13 is a diagram showing an example of the configuration of the information generation device 10d according to this embodiment. The information generation device 10d includes a control unit 11d and a storage unit 12d.

Comparing the information generation device 10d (FIG. 13) according to this embodiment with the information generation device 10 (FIG. 6) according to the first embodiment, the control unit 11d and the storage unit 12d are different. The description of the same functions as those of the first embodiment will be omitted and the explanation below about third embodiment will focus on the portions that are different from those of the first embodiment.

The control unit 11d includes the signal intensity acquisition unit 110, the signal intensity determination unit 111, the recording unit 112, a learning unit 113d, an identification unit 114d, and a sorting unit 115d. Additionally, the same reference numerals are assigned to the same configurations and operations as those of the above-described first embodiment and the description thereof is omitted.

The learning unit 113d generates learning information 121d on the basis of the cell information CI and the optical information 120. Here, the cell information CI is, for example, a list indicating the type of cells C in the order in which they flow through the flow path 20d. The learning information 121d is information in which the type of the cells C is associated with temporal changes in the optical signal intensity of the signal light LS from the cells C stored as the optical information 120. The learning unit 113d generates a discriminant model using the learning information 121d as training data in machine learning. Machine learning is, for example, deep learning. The storage unit 12d stores information generated by the learning unit 113d in which the type of the cell C and the temporal changes in the optical signal intensity of the signal light LS from the cell C are associated with each other. Further, the storage unit 12d stores the optical information 120.

For example, the learning unit 113d acquires the cell information CI from an external database. Further, the cell information CI may be supplied to the learning unit 113d through an operation unit (not shown) of the PC 8d that accepts the user's operation of the cell sorter 1d.

The learning unit 113d stores the generated learning information 121d in the storage unit 12d.

The identification unit 114d identifies the type of the cell C flowing through the flow path 20d on the basis of the learning information 121d and the optical information 120. That is, the identification unit 114d identifies the type of the cell C on the basis of temporal changes in the intensity of the optical signal of the signal light LS being obtained from the cell C included in the sample for measurement and being stored as the optical information 120 and a discriminant model created by learning with training data associating temporal changes in the optical signal with the type of the cell.

The identification unit 114d supplies the identification result to the sorting unit 115d.

The sorting unit 115d outputs a command to the sorting unit 200d for switching the route through which the cell C is allowed to flow by the sorting unit 200d on the basis of the identification result of the identification unit 114d. When the type of the cell C indicated by the identification result is a predetermined cell, the sorting unit 115d outputs a command of switching the route through which the cell C flows to the sorting route 201d to the sorting unit 200d. On the other hand, when the type of the cell C indicated by the identification result is not a predetermined cell, the sorting unit 115d outputs a command of switching the route through which the cell C flows to the non-sorting route 202d to the sorting unit 200d. Further, the sorting unit 115d acquires the sorting trigger signal SL. The sorting trigger signal SL is a signal for determining when the sorting unit 200d sorts the cell C.

As described above, the cell sorter 1d according to this embodiment includes the flow cytometer (in this example, a portion excluding the sorting unit 200d in the configuration of the cell sorter 1d) and the sorting unit 200d which sorts the observation target (in this example, the cell C).

In the cell sorter 1d, in the flow path 20d provided in the microfluidic device 2d, the sorting trigger signal detection positions STd for detecting the sorting trigger signal SL determining the timing at which the sorting unit 200d sorts the observation target (in this example, the cell C) are arranged linearly in the width direction (the x-axis direction) on the plane of the depth-direction position where the passage of the cell C is allowed in the flow path 20d.

An example with a configuration similar to that of the first embodiment is shown in FIG. 11 as an example of the third embodiment, but the present invention is not limited thereto. The optical signal detection position SPd or the sorting trigger signal detection position STd in the flow path 20d can be arranged by the configuration using the spatial filter shown in the first modified example of the first embodiment. Further, the cell sorter 1d according to the third embodiment can also be implemented in combination with the structured detection configuration shown in the second modified example of the first embodiment.

With this configuration, in the cell sorter 1d according to this embodiment, since the timing for sorting a predetermined observation target can be appropriately set with good reproducibility regardless of the streamline position of the flow path 20d on the plane of the depth-direction position where the passage of the cell C is allowed, it is possible to prevent failure in sorting due to missing the sorting timing of the predetermined observation target even when a positional deviation occurs in the width direction of the streamline.

In the first to third embodiments described above, the flow cytometer in which the optical signal detection positions are arranged in the width direction of the flow path on the plane of the depth-direction position where the passage of the cell C is allowed in the flow path and the high-speed measurement can be performed while ensuring the reproducibility of the data against the positional deviation of the streamline in the width direction of the flow path has been described. In fourth to sixth embodiments described below, the flow cytometer in which the optical signal detection positions are arranged in the depth direction of the flow path and the high-speed measurement can be performed while ensuring the reproducibility of the data against the positional deviation of the streamline in the depth direction of the flow path will be described. Further, in a seventh embodiment, the flow cytometer in which the optical signal detection positions are arranged at different positions in the width direction as well as the depth direction of the flow path and the high-speed measurement can be performed while ensuring robustness in the measurement against the positional deviation of the streamline in the depth direction of the flow path and the positional deviation of the streamline in the width direction of the flow path will be described.

Additionally, the width direction of the flow path and the depth direction of the flow path are examples of the predetermined directions of the flow path.

### (Fourth embodiment)

Hereinafter, a fourth embodiment of the present invention will be described in detail with reference to the drawings.

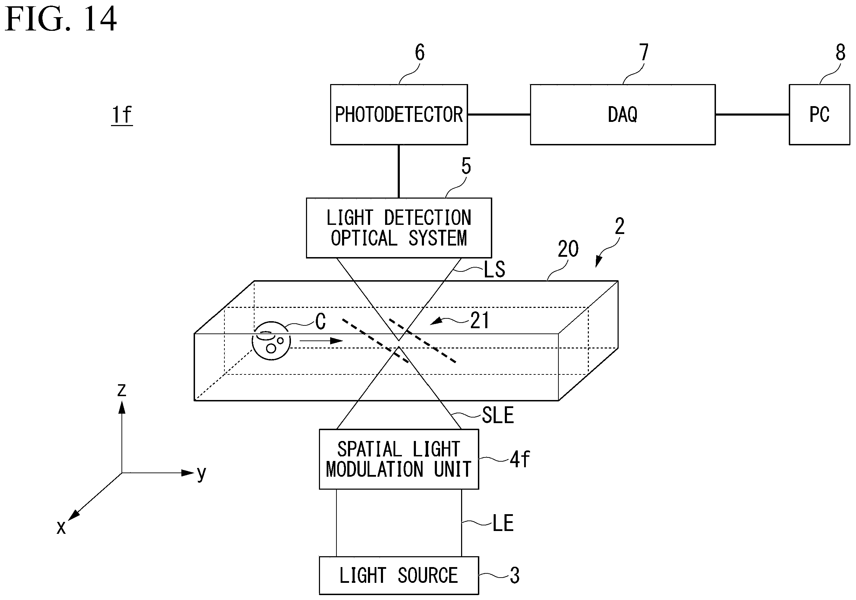

FIG. 14 is a diagram showing an example of a flow cytometer 1f according to this embodiment. The flow cytometer 1f includes the microfluidic device 2, the light source 3, a spatial light modulation unit 4f, the light detection optical system 5, the photodetector 6, the data acquisition (DAQ) device 7, and the personal computer (PC) 8. The description of the same functions as those of the first embodiment will be omitted and the explanation below about the fourth embodiment will focus on the portions that are different from those of the first embodiment.

The configuration of the spatial light modulation unit 4f is the same as the configuration of the spatial light modulation unit 4 (FIG. 2), but in the spatial light modulation unit 4f, the illumination pattern of the structured illumination light is different from that of the spatial light modulation unit 4 (FIG. 2). The spatial light modulation unit 4f irradiates the structured illumination light to different positions in the depth direction of the flow path 20.

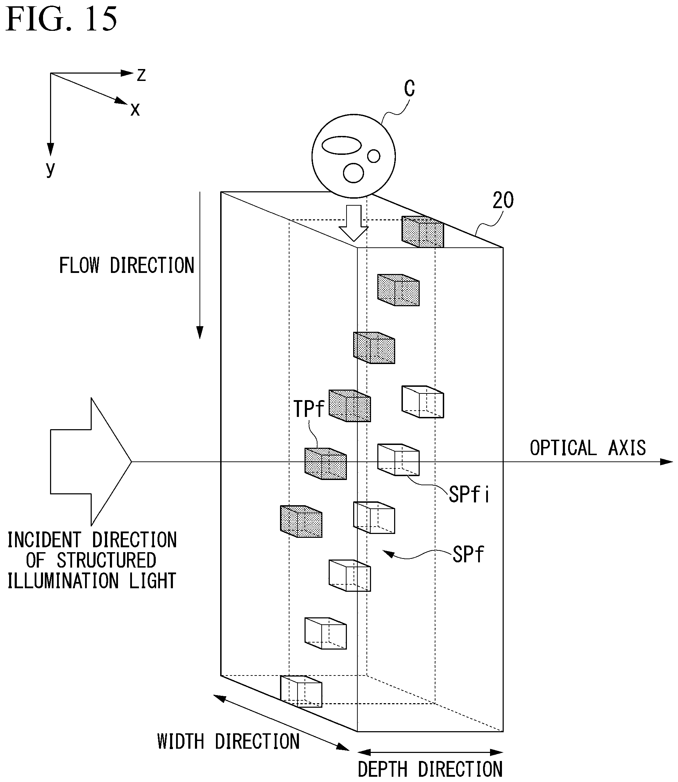

Here, the irradiation position which is a position in which the structured illumination light SLE is irradiated in the flow path 20 will be described with reference to FIG. 15. FIG. 15 is a diagram showing an example of the irradiation position according to this embodiment. In FIG. 15, a configuration in which the intensity of the illumination light is modulated by the spatial light modulator and the structured illumination light SLE is irradiated only to the irradiation position in the flow path is described as an example. The structured illumination light SLE is irradiated to a position in which the cell C passes through the flow path 20 in the width direction of the flow path 20. The structured illumination light SLE is irradiated to different depth positions in the depth direction of the flow path 20. Furthermore, in FIG. 15, for the sake of explanation, the light spots that make up the structured illumination pattern are shown as a plurality of cubes and the cell C which is the observation target is irradiated at the irradiation position with the structured illumination light SLE including the pattern composed of a plurality of light spots (structured illumination pattern).

The structured illumination light SLE is irradiated from the top surface toward the bottom surface of the flow path 20. The top surface of the flow path 20 is the surface on which the structured illumination light enters, among the surfaces forming the flow path. Here, the optical axis of the structured illumination light SLE is parallel to the depth direction (the z-axis direction) of the flow path 20. That is, the structured illumination light SLE is irradiated to the flow path 20 so that the optical axis is parallel to the depth direction (the z-axis direction) of the flow path 20.

As the structured illumination light SLE is irradiated to the flow path 20 with its optical axis parallel to the depth direction (the z-axis direction) of the flow path 20, the structured illumination light SLE is imaged and irradiated as a plurality of squares at the irradiation positions on the cross-section (yz plane indicated by a dashed line in FIG. 15) in the width direction position where the cells pass through in the flow path 20. The directions of the multiple square surfaces forming the structured illumination pattern is perpendicular to the depth direction (the z-axis direction) of the flow path 20. In other words, the square surfaces of the structured illumination pattern are oriented parallel to the bottom or top surface of the flow path 20.

Hereinafter, the above yz plane, which the x-axis direction position is the width-direction position in which the cell C moves in the flow path 20, is also referred to as the plane of the width-direction position in which the cell C passes.

The irradiation position of the flow path 20 includes an optical signal detection position SPf and a trigger signal detection position TPf. The optical signal detection position SPf is a position irradiated with the structured illumination light SLE to acquire the optical information of the cell C and the signal light LS generated when the cell C passes through the optical signal detection position SPf is detected by the photodetector 6. As described above, the trigger signal detection position TPf is a position for generating the recording trigger signal for the PC 8 to start generating optical information as described above. The signal light generated when the cell C passing through the flow path 20 passes through the trigger signal detection position TPf is detected by the photodetector 6.

The plurality of optical signal detection positions SPf are arranged linearly at equal intervals in the depth direction (the z-axis direction) of the flow path 20 in the plane of the width-direction position in which the cell C passes in the flow path 20. Accordingly, even when the cell C passes through any position in the depth direction (the z-axis direction) of the flow path 20, the similar signal is always acquired regardless of the passage position. The optical signal detection positions SPf are respectively referred to as SPfi (i=1, 2,..., N: N is the number of the optical signal detection positions SPf) in order in the depth direction of the flow path 20.

It is more preferable to arrange the optical signal detection positions SPf so that a gap between the adjacent optical signal detection positions SPf in the depth direction (the z-axis direction) of the flow path 20 on the plane of the width-direction position where the passage of the cell C is allowed becomes narrower to a degree that the adjacent optical signal detection positions SPf do not overlap each other. Due to this arrangement, when the cell C passes through the optical signal detection position SPf, each portion of the cell C extending in the depth direction (the z-axis direction) of the flow path 20 can be detected without omission by the different optical signal detection positions SPf.

As described above, in the structured illumination configuration, the spatial light modulation unit 4f is installed on the optical path between the light source 3 and the flow path 20 and the structured illumination light SLE modulated by the spatial light modulation unit 4f and structured into a specific illumination pattern is used. In the example of FIG. 15, on the plane of the width-direction position where the passage of the cells C is allowed in the flow path 20, the structured illumination light SLE irradiated to the irradiation position is irradiated as a pattern composed of a plurality of squares and the shape of the structured illumination irradiated to the individual optical signal detection positions SPf arranged in the flow path 20 is also square. Further, in all of the plurality of arranged optical signal detection positions SPf, the length of one side of the square of the structured illumination irradiated to the optical signal detection positions SPf is the same. That is, in the example of FIG. 15, the shape of the minimum unit area that constitutes the structured illumination pattern at the irradiation position is a square and the flow path 20 is irradiated at each optical signal detection position SPf with the same type of structured illumination light SLE, which is composed of a plurality of squares with the same side length.

With the above-described configuration, each portion of the cell C is illuminated by the same type of structured illumination light SLE and is detected by a common method for each portion regardless of whether which portion of the cell C passes through which optical signal detection position SPf.

As described above, the optical signal detection position SP is a position irradiated with the structured illumination light SLE to acquire the signal light LS for acquiring the optical information of the cell C. The intensity of the signal light LS detected by the photodetector 6 is detected by a common method for each portion of the cell C. Here, the detection by the common method for each portion of the cell C is, as an example, a method in which the plurality of optical signal detection positions SP are respectively irradiated with the structured illumination lights SLE having the same shape and size which are similarly modulated by the spatial modulator 40 on the optical path and the photodetector 6 detects the signal light LS from each portion of the cell C passing through each optical signal detection position SP.

In the flow cytometer 1f, since the plurality of optical signal detection positions SP are arranged linearly with an inclination with respect to the depth direction of the flow path 20 on the plane of the width-direction position where the passage of the cell C is allowed in the flow path 20. Thereby, the cell C which passes through the optical signal detection positions SP arranged in the flow path 20 passes through the optical signal detection positions SP installed in the flow path 20 in such a manner that the portions constituting the cell C sequentially pass through the optical signal detection positions SP installed in the flow path 20 in the order of the spatial arrangement (in the +x direction of FIG. 15) of the portions constituting the cell C with respect to the depth direction of the flow path 20. Thus, in the flow cytometer 1f, the spatial order of arrangement of the portions constituting the cell C with respect to the depth direction of the flow path 20 and the temporal order in which the portions of the cell C pass through the optical signal detection positions SP match.

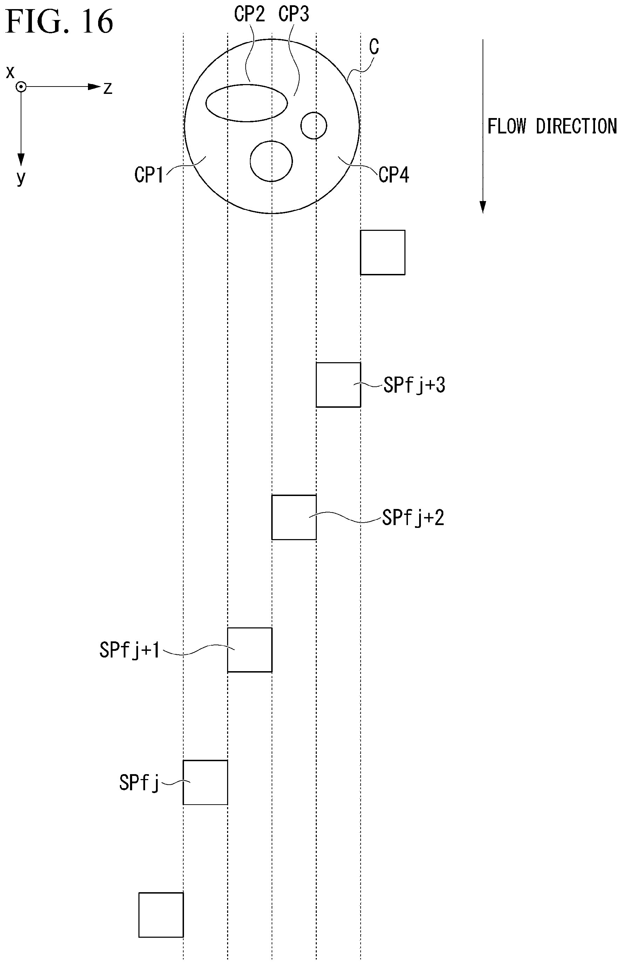

Here, the correspondence relationship between the portion constituting the cell C and the optical signal detection position SPf through which the cell C passes when passing through the irradiation position of the flow path 20 will be described with reference to FIGS. 15 and 16. FIG. 16 is a diagram showing an example of the correspondence relationship between the optical signal detection position SPf and the portion constituting the cell C on the plane of the width-direction position where the passage of the cell C is allowed in the flow path 20 in this embodiment. In FIG. 16, although the optical signal detection position SPf is schematically described as a square, the light spot at the optical signal detection position SPf has a three-dimensional shape centered on each light spot and having a thickness defined by the depth of focus in the optical axis direction. FIG. 16 schematically shows the correspondence relationship between the portion constituting the cell C and the optical signal detection position SPf on the plane indicated by a dotted line in FIG. 15 in this embodiment.

The portions through which the cell C passes when passing through the optical signal detection position SPf at the irradiation position of the flow path 20 are referred to as the portions CPi (i=1, 2,..., N: N is the total number of the optical signal detection positions SPf through which the cell C passes when passing through the irradiation position) in order of the depth direction (the z-axis direction) of the flow path 20. FIG. 16 shows an example of a case in which N is 4 when the cell C passes through five optical signal detection positions SPf. In FIG. 16, the portions CP1, CP2, CP3, and CP4 of the cell C respectively pass through the optical signal detection positions SPfj, SPfj+1, SPfj+2, and SPfj+3 of the optical signal detection position SPf.

The optical signal detection positions SPf installed in the flow path 20 are set such that i=1, 2,..., M (M is the number of the optical signal detection positions SPf installed at the irradiation positions) in order of the +z-axis. FIG. 16 shows an example in which M is 6 when six optical signal detection positions SPf are installed in the flow path 20. In the optical signal detection position SPf, if the optical signal detection positions SPf for detecting the portions CPi (i=1, 2,..., N) of the cell C are assume to be respectively the optical signal detection position SPfj, the optical signal detection position SPfj+1,..., the optical signal detection position SPfj+N-1, then the portion CP1, the portion CP2,..., the portion CPN of the cell C respectively pass through the optical signal detection position SPfj, the optical signal detection position SPfj+1,..., the optical signal detection position SPfj+N-1. In FIG. 16, the portions CP4, CP3, CP2, and CP1 of the cell C respectively pass through the optical signal detection positions SPfj+3, SPfj+2, SPfj+1, and SPfj in this temporal order.

Further, the size of the structured illumination light of the optical signal detection position SPf is more preferably 1/10 or less the size of the cell C on the same plane of the flow path 20 in which the structured illumination pattern is arranged. Thereby, the structured illumination lights of the individual optical signal detection positions SPf can be arranged to be sufficiently smaller than the size of the observation target (the cell C in this example) at high density. Considering the size of a normal cell, the shape of individual structured illumination light (the light spot) of the optical signal detection position SPf on the same plane is, for example, a square with a side length of several microns or less on the plane of the width-direction position where the passage of the cell C is allowed in the flow path 20.

In this way, in the flow cytometer 1f, the correspondence relationship between the spatial order of the portions constituting the cell C passing through the optical signal detection position SPf and the temporal order when these portions pass through the optical signal detection positions SPf does not change in the width direction of the flow path 20. Further, even when the cell C passes through any of the optical signal detection positions SPf of the flow path 20, the timing at which the optical signal is generated due to the passage of the cell C does not change. That is, even when the cell C deviates to any position in the depth direction of the flow path 20 and passes through the optical signal detection position SPf, the portions of the cell C are irradiated with structured illumination at the optical signal detection position SPf in the spatial order of the plurality of optical signal detection positions SPf arranged in the flow path 20 in the depth direction of the flow path 20. Thereby, the correspondence relationship between the temporal order of the detection of the signal light LS emitted from each portion of the cell C and the spatial order of each portion of the cell C with respect to the depth direction of the flow path 20 does not change.

Further, in the flow cytometer 1f, the optical signal detection positions SPf are respectively illuminated by the same type of structured illumination light SLE and the plurality of optical signal detection positions SPf are arranged linearly at equal intervals and at high density in the depth direction of the flow path 20. With this configuration, temporal changes in the intensity of the optical signal for each portion of the cell C detected at the optical signal detection position SPf do not change even when the cell C passes through any position in the depth direction of the flow path 20.

That is, in the flow cytometer 1f, even when the position of the observation target flowing together with the fluid flowing through the flow path deviates in the depth direction of the flow path, there is no temporal change in the intensity of the detected optical signal. In the description below, the positional deviation of the observation target flowing together with the fluid flowing through the flow path with respect to the depth direction of the flow path is also referred to as the positional deviation of the streamline in the depth direction.

In the flow cytometer 1f, the optical signal detection position SPfi and the optical signal detection position SPfi+1 which are adjacent to each other are arranged without any gap in the depth direction (the z-axis direction) of the flow path 20 on the plane of the width-direction position where the passage of the cell C is allowed. Here, when there is a gap between the optical signal detection position SPfi and the optical signal detection position SPfi+1 which are adjacent to each other, a part of the cell C cannot be detected if that part of the cell C passes through the gap. Therefore, the optical signal detection position SPfi and the optical signal detection position SPfi+1 which are adjacent to each other are preferably arranged without any gap in the depth direction of the flow path 20.

The optical signal detection positions SPf located at both ends among the optical signal detection positions SPf are respectively arranged at predetermined intervals from the wall of the bottom surface or the top surface of the flow path 20. In that case, it is preferable to control the cell C so that the cell flows in the vicinity of the center of the depth direction (the z-axis direction) of the flow path 20. For example, the cell C flows in the vicinity of the center by generating the fluid flow from both the top surface and the bottom surface of the flow path 20 toward the center in the depth direction (the z-axis direction) of the flow path 20. Additionally, each of the optical signal detection positions SPf located at both ends among the optical signal detection positions SPf may be disposed without any gap from the wall of the bottom surface or the top surface of the flow path 20.

In the flow cytometer 1f, the individual optical signal detection positions SPf are arranged on the plane of the width-direction position where the passage of the cell C is allowed not to overlap each other in the length direction (the y-axis direction) of the flow path 20. That is, the optical signal detection positions SPf are arranged linearly with an inclination with respect to the depth direction (the z-axis direction) of the flow path 20 and these are arranged not to overlap each other in the length direction (the y-axis direction) of the flow path 20. When there are the optical signal detection positions SPf arranged to overlap each other in the length direction (the y-axis direction) of the flow path 20 among the optical signal detection positions SPf, the time for detecting the cell C at these optical signal detection positions SPf overlaps and the intensity of the detected optical signal cannot be separated by the measurement time.

In this embodiment, since the individual optical signal detection positions SPf are arranged not to overlap each other in the length direction (the y-axis direction) of the flow path 20, the cell C is detected at a different time for each portion detected at a different optical signal detection position SPf in the depth direction (the z-axis direction) of the flow path 20.

Further, in order to sufficiently separate and detect the intensity of the optical signal for each detected portion in terms of time, it is more preferable that the individual optical signal detection positions SPf are separately arranged from each other by a length approximately equal to the size of the cell C in the length direction (the y-axis direction) of the flow path 20.

Additionally, as described above, in this embodiment, an example of a case in which the photodetector 6 is PMT has been described, but the present invention is not limited thereto. The photodetector 6 may be a multi-anode electron multiplier as another example. When the photodetector 6 is the multi-anode electron multiplier, the optical signal detection positions SPfi may be arranged to overlap each other in the length direction (the y-axis direction) of the flow path 20.

Since the multi-anode electron multiplier includes a plurality of channels for detecting a plurality of optical signals, the plurality of channels can respectively correspond to the plurality of optical signal detection positions SPf. Therefore, even when the optical signal detection positions SPf are arranged to overlap each other in the length direction (the y-axis direction) of the flow path 20, the multi-anode electron multiplier can simultaneously detect each of the optical signals generated when the portions of the plurality of cells C respectively pass through the plurality of optical signal detection positions SPf at the same time by the plurality of channels.

The plurality of trigger signal detection positions TPf are arranged on the upstream side of the flow path 20 (the -y direction of the y-axis direction) in relation to the optical signal detection positions SPf to be separated from the plurality of optical signal detection positions SPf by the same predetermined distance in the length direction of the flow path 20 on the plane of the width-direction position where the passage of the cell C is allowed in the flow path 20. That is, the trigger signal detection positions TPf are arranged on a straight line parallel to the straight line along which the plurality of optical signal detection positions SPf are arranged.

Since the cell C flows in the +y direction of the y-axis direction of the flow path 20, the cell C passes through the trigger signal detection position TPf and then passes through the optical signal detection position SPf.

Since the plurality of trigger signal detection positions TPf are arranged, on the plane of the width-direction position where the passage of the cell C is allowed, to be separated by the same predetermined distance in the length direction of the flow path 20 while respectively corresponding to the plurality of optical signal detection positions SPf. Thereby, the time from the start of the generation of optical information to the detection of the optical signal is constant regardless of where the cell C flows in the depth direction of the flow path 20.

The trigger signal detection positions TPf located at both ends among the trigger signal detection positions TPf are respectively arranged at predetermined intervals from the wall of the bottom surface or the top surface of the flow path 20. In that case, it is preferable to control the cell C so that the cell flows in the vicinity of the center of the depth direction (the z-axis direction) of the flow path 20. Additionally, each of the trigger signal detection positions TPf located at both ends among the trigger signal detection positions TPf may be disposed without any gap from the wall of the bottom surface or the top surface of the flow path 20.

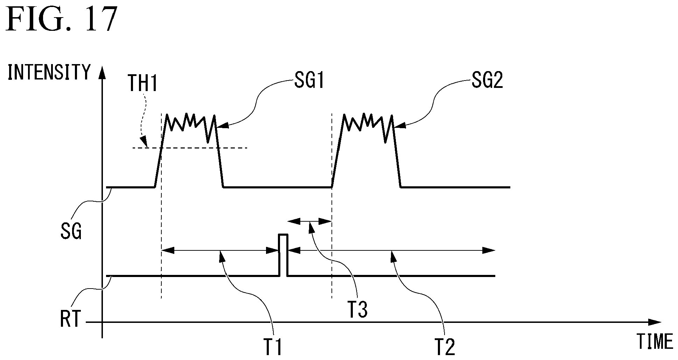

Here, a recording trigger signal RT and a measurement signal SG will be described with reference to FIG. 17. FIG. 17 is a diagram showing an example of temporal changes in optical signal intensity according to this embodiment. In the description of FIG. 17, the explanation will focus on the portions different from FIG. 5 of the first embodiment described above.

As shown in FIG. 17, the measurement signal SG includes the first signal SG1 and the second signal SG2.

The first signal SG1 is an electrical signal waveform corresponding to the optical signal detected by the cell C passing through the trigger signal detection position TPf.

In FIG. 17, the first signal SG1 exceeds the trigger threshold TH1 and hence the recording trigger signal RT rises in a pulse shape. Here, when the first signal SG1 exceeds the trigger threshold TH1, the recording trigger signal RT rises in a pulse shape when the pre-recording start time T1 elapses since the first signal SG1 is detected. The pre-recording start time T1 is a predetermined time set in advance. When the recording trigger signal RT rises in a pulse shape, the PC 8 starts recording.

The second signal SG2 is an electrical signal waveform corresponding to the optical signal detected by the cell C passing through the optical signal detection position SPf. In the second signal SG2, a plurality of peaks are observed corresponding to the fact that the optical signal is detected at different times by different optical signal detection positions SPf for each portion of the cell C in the depth direction (the z-axis direction) of the flow path 20. The time from the recording start time to the detection of the optical signal at the optical signal detection position SPf is referred to as the pre-signal detection time T3.

As described above, in the flow cytometer 1f, the plurality of trigger signal detection positions TPf and the plurality of optical signal detection positions SPf are arranged in parallel in the flow path 20. Therefore, even when the cell C flows through any position in the depth direction of the flow path 20, the time from the detection of the first signal SG1 to the detection of the second signal SG2 is constant under the condition that the flow velocity and the size of the cell C are constant and hence the pre-signal detection time T3 can be kept constant.

Further, in the flow cytometer 1f, the recording time T2 is set in accordance with the arrangement position of the optical signal detection position SPf installed in the flow path 20 under the condition that the flow velocity and the size of the cell C are constant. Therefore, even when the cell C flows through any position in the depth direction of the flow path 20, the recording time T2 can be kept constant.

Furthermore, in this embodiment, a case in which the number of rows of the optical signal detection positions SP arranged linearly at equal intervals in the depth direction of the flow path 20 in the flow path 20 has been described, but the present invention is not limited thereto. In the flow cytometer 1f, the number of rows of the optical signal detection positions SP arranged linearly at equal intervals in the depth direction of the flow path 20 on the plane of the width-direction position where the passage of the cell C is allowed in the flow path 20 may be two or more.

As described above, the flow cytometer 1f according to this embodiment includes the microfluidic device 2 including the flow path 20 through which the observation target (in this example, the cell C) can flow together with the fluid, the photodetector 6 detecting the intensity of the optical signal (in this example, the signal light LS collected by the light detection optical system 5) in time series, and the information generation device 10 (in this example, the PC 8). The information generation device 10 generates the optical information 120 indicating the morphology and structure of the observation target (in this example, the cell C) on the basis of temporal changes in the intensity of the optical signal detected by the photodetector 6.

In the flow cytometer 1f, since the intensity of the optical signal detected by the photodetector 6 is detected by a common method for each portion of the observation target (in this example, the cell C), the plurality of optical signal detection positions SPf are arranged linearly at equal intervals in the depth direction of the flow path 20 on the plane of the width-direction position where the passage of the cell C is allowed in the flow path 20 provided in the microfluidic device 2. Thereby, each optical signal detection position SPf is illuminated by the same type of light structured by the spatial light modulation unit 4f. Further, in the flow cytometer 1f, the trigger signal detection positions TPf for detecting the recording trigger signal for the information generation device 10 to start the generation of the optical information 120 are arranged to be separated by the same predetermined distance in the length direction of the flow path 20 while respectively corresponding to the plurality of optical signal detection positions SPf.

With this configuration, in the flow cytometer 1f according to this embodiment, the plurality of optical signal detection positions SPf arranged linearly with an inclination with respect to the depth direction of the flow path 20 are irradiated with structured illumination. Therefore, even when the positional deviation of the streamline through which the cell C flows in the flow path 20 occurs in the depth direction of the flow path, the correspondence relationship between the spatial order and the temporal order stay unchanged all the time, and robust measurement against the positional deviation of the streamline is performed compared to a case in which irradiation positions of the flow path 20 are entirely irradiated by structured illumination with a random pattern.

Further, in the flow cytometer 1f according to this embodiment, the plurality of trigger signal detection positions TPf are arranged in parallel to the optical signal detection position SPf on the plane of the width-direction position where the passage of the cell C is allowed. Thereby, even when the cell C flows through any position in the depth direction of the flow path 20, the pre-signal detection time T3 which is a time from the recording start time to the detection of the optical signal of the cell C at the optical signal detection position SPf and the recording time T2 can be kept constant. Accordingly, in the flow cytometer 1f according to this embodiment, it is possible to set the measurement time per cell to the minimum necessary length without missing the optical signal from the cell C passing through the flow path 20 and to achieve the robust measurement against the positional deviation of the streamline in the depth direction and the high-speed measurement at the same time. That is, in the flow cytometer 1f according to this embodiment, it is possible to realize the high-speed measurement while ensuring the reproducibility of the data against the positional deviation of the depth direction of the streamline.

Further, in the flow cytometer 1f according to this embodiment, the plurality of optical signal detection positions SPf are arranged linearly with an inclination with respect to the depth direction of the flow path 20 and are also arranged not to overlap each other in the length direction of the flow path 20 on the plane of the width-direction position where the passage of the cell C is allowed.

With this configuration, in the flow cytometer 1f according to this embodiment, since the times for passing through the optical signal detection position SPf for each portion of the cell C are sufficiently separated without overlapping, the intensity of the optical signal for each portion of the cell C to be detected can also be temporally separated without mixing with each other.

Furthermore, in FIGS. 15 and 16, the plurality of optical signal detection positions SPf are installed in the flow path 20 to gradually become shallower along the movement direction of the fluid flow (from upstream to downstream) from a shallower position, but conversely can also be installed to gradually become shallower from a deeper position.

Further, in the flow cytometer 1f according to this embodiment, the trigger signal detection position TPf is disposed on the upstream side of the flow path 20 in relation to the optical signal detection position SPf.

With this configuration, in the flow cytometer 1f according to this embodiment, since the cell C passes through the optical signal detection position SPf after passing through the trigger signal detection position TPf, it is possible to reliably and stably acquire the optical information 120 by the optical signal detection position SPf even when the cell C flows to any position in the depth direction of the flow path 20.

Additionally, the plurality of trigger signal detection positions TPf may be arranged on the downstream side of the flow path (in the -y direction of the y-axis direction) in relation to the optical signal detection position SPf. When the plurality of trigger signal detection positions TPf are arranged on the downstream side of the flow path in relation to the optical signal detection position SPf, the information generation device generates the optical information even before the recording starts and temporarily stores the generated optical information in the storage unit. In that case, when the cells are detected at the plurality of individual optical signal detection positions SPf and the intensity of the optical signal detected by the photodetector is equal to or larger than the trigger threshold, the information generation device deletes the optical information which is stored prior to a predetermined time from the time when the optical signal is detected from the optical information stored in the storage unit.

Further, in the flow cytometer 1f according to this embodiment, the plurality of optical signal detection positions SPf are respectively irradiated with the same type of structured light (structured illumination light SLE in this example). Furthermore, in the flow cytometer 1f according to this embodiment, the size of the structured illumination light irradiated to the individual optical signal detection position SPf in the flow path 20 is set to be sufficiently smaller than the size of the cell C corresponding to the observation target and the plurality of optical signal detection positions SPf irradiated with structured illumination light are arranged linearly at equal intervals in the depth direction of the flow path 20 at high density on the plane of the width-direction position where the passage of the cell C is allowed.

With this configuration, in the flow cytometer 1f according to this embodiment, since detected data is robust against the positional deviation in the depth direction of streamline, reproducibility of measurement result can be ensured.

Furthermore, the flow cytometer 1f according to this embodiment can be used as the cell sorter that sorts cells by using the microfluidic device 2d and the PC 8d of the cell sorter 1d (FIG. 11) according to the third embodiment instead of the microfluidic device 2 and the PC 8.

### (Modified example of fourth embodiment)

In the description above, a case in which the optical signal detection position and the trigger signal detection position are set to different positions has been described. In this modified example, a case in which the trigger signal detection position is also served as the optical signal detection position will be described.

The flow cytometer according to this embodiment is referred to as a flow cytometer 1g and the information generation device is referred to as an information generation device 10g.

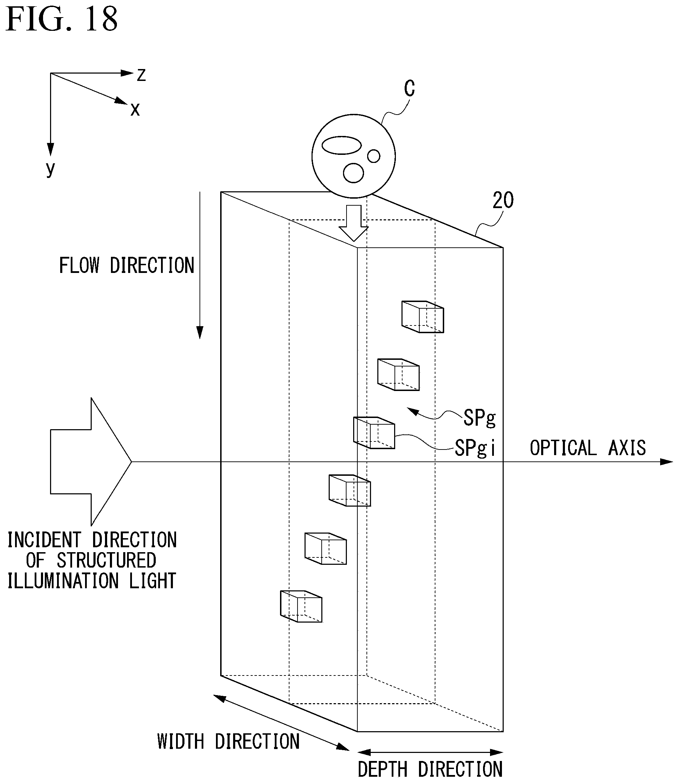

The irradiation position which is a position irradiated with the structured illumination light SLE in the flow path 20 will be described with reference to FIG. 18. FIG. 18 is a diagram showing an example of the irradiation position according to this modified example. In FIG. 18, although the light spots that make up the structured illumination pattern are described as cubes for the sake of explanation, the light spots actually have a three-dimensional shape with a thickness in the optical axis direction defined by the depth of focus around each light spot.

In this modified example, the irradiation position is an optical signal detection position SPg composed of a plurality of optical signal detection positions. Since the arrangement of the optical signal detection positions SPg in the flow path 20 (FIG. 18) is the same as the arrangement of the optical signal detection positions SP of the fourth embodiment (FIG. 15), the description is omitted.

The trigger signal detection position is also served as the plurality of optical signal detection positions SPg. That is, the plurality of optical signal detection positions SPg are also positions for the photodetector 6 to detect a trigger signal for the information generation device 10g to start the generation of the optical information.

In this modified example, a recording unit 112g of the information generation device 10g generates optical information 120g even before the recording starts and temporarily stores the generated optical information 120g in the storage unit 12g. When the cell C is detected at the plurality of optical signal detection positions SPg and the intensity of the optical signal detected by the photodetector 6 is equal to or larger than the trigger threshold TH1, the recording unit 112g deletes the optical information 120g which is stored prior to the time when a predetermined time set as the pre-recording start time T1 elapses since the time when the intensity of the optical signal equal to or larger than the trigger threshold TH1 is detected from the optical information 120g temporarily stored in the storage unit 12g. Furthermore, the recording unit 112g stores the remaining optical information 120g in the storage unit 12 as the optical information indicating the morphology of the cell C.

As described above, in the flow cytometer 1g according to this modified example, the trigger signal detection position is also served as the optical signal detection position SPg.

With this configuration, in the flow cytometer 1g according to this modified example, since it is not necessary to set the trigger signal detection position separately from the optical signal detection position SPg, it is possible to simplify the configuration of the device of the flow cytometer 1g.

Additionally, in the embodiment described below, a case in which the trigger signal detection position is also served as the optical signal detection position will be described as in this modified example.

### (Fifth embodiment)

Hereinafter, a fifth embodiment of the present invention will be described in detail with reference to the drawings.

In the fourth embodiment, a case in which the structured illumination light SLE is irradiated to the flow path 20c so that the optical axis is parallel to the depth direction of the flow path 20 has been described. When the structured illumination light SLE is irradiated to the flow path 20c so that the optical axis is parallel to the depth direction of the flow path 20, the structured illumination light SLE needs to be imaged as a structured illumination pattern at different positions along the optical axis. In this embodiment, a case in which the structured illumination light SLE is imaged as the structured illumination pattern having a different position in the optical axis direction by inclining the depth direction of the flow path 20c with respect to the irradiation direction of the structured illumination light SLE will be described.

The flow cytometer according to this embodiment is referred to as a flow cytometer 1h and the flow path is referred to as the flow path 20c.

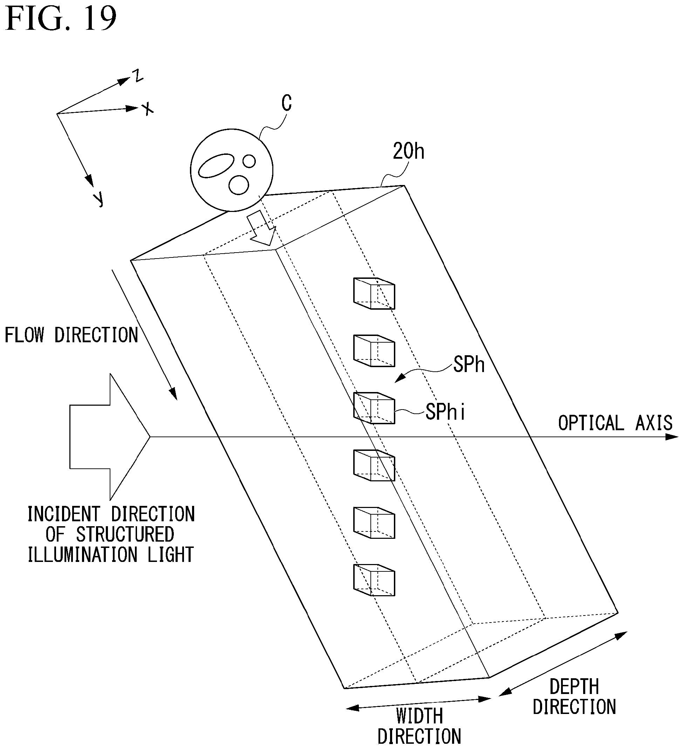

FIG. 19 is a diagram showing an example of the irradiation position according to this embodiment. The structured illumination light SLE is irradiated into a flow path 20 h from its bottom surface to the plane of the width-direction position where the passage of the cell C is allowed (the plane indicated by a dashed line in FIG. 19) in the flow path 20h. Here, the incident direction which is the irradiation direction of the structured illumination light SLEh (the direction of the optical axis) and the depth direction (the z-axis direction) of the flow path 20 are inclined by a predetermined angle. That is, the structured illumination light SLE is irradiated to the flow path 20 so that the optical axis is inclined by a predetermined angle with respect to the depth direction (the z-axis direction) of the flow path 20. Accordingly, the propagation direction of the structured illumination light SLE is inclined by a predetermined angle with respect to the depth direction of the flow path 20. The predetermined angle is, for example, 45°. The predetermined angle may be any angle if the angle is larger than 0° and smaller than 90°. The light spot forming the structured illumination pattern is shown as a cube in FIG. 19 for the sake of explanation, but the light spot is actually a three-dimensional shape having a thickness in the optical axis direction defined by the depth of focus centered on each light spot.

Since the structured illumination light SLE is irradiated to the flow path 20 while being inclined by a predetermined angle with respect to the depth direction (the z-axis direction) of the flow path 20h, the structured illumination pattern formed by imaging the structured illumination light SLE is imaged at an optical signal detection position SPh of a different position in the depth direction of the flow path 20h. Here, the plurality of optical signal detection positions SPh are arranged linearly at equal intervals in the depth direction of the flow path 20h.

Further, the orientation of the surface of the structural illumination pattern shown in a cube shape in FIG. 19 is inclined with respect to the depth direction (the z-axis direction) of the flow path 20h. In other words, the surface orientation of the structured illumination pattern which is shown in a cube shape in FIG. 19 is inclined by a predetermined angle with respect to the bottom surface or the top surface of the flow path 20h.

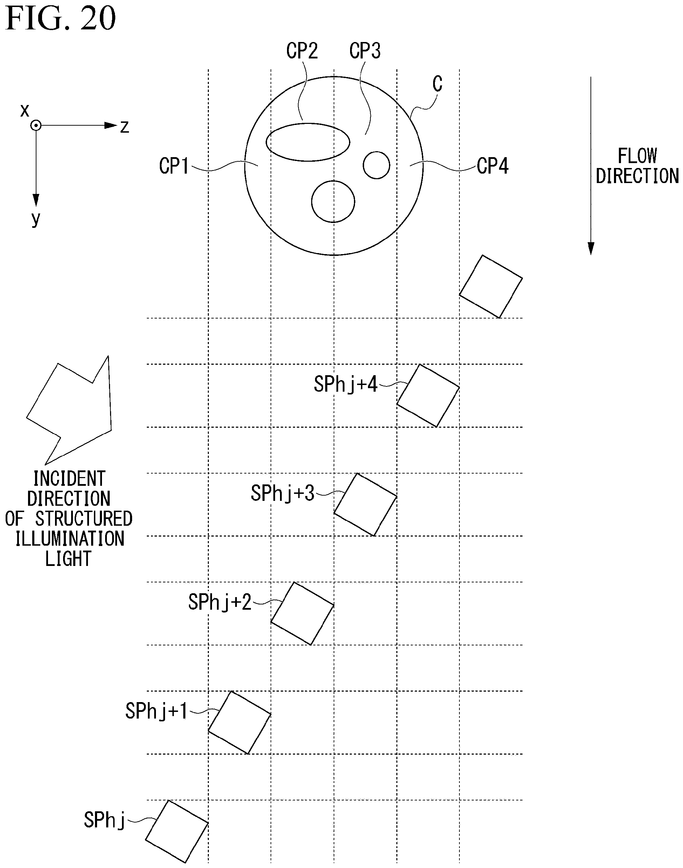

FIG. 20 is a diagram showing an example of the correspondence relationship between the optical signal detection position SP and the portion constituting the cell C according to this embodiment. FIG. 20 schematically shows the correspondence relationship between the optical signal detection position SP and the portion constituting the cell C according to this embodiment on the plane indicated by a dotted line in FIG. 19.

The portions through which the cell C passes when passing through the optical signal detection position SP at the irradiation position of the flow path 20h are referred to as the portions CPi (i=1, 2,..., N: N is the total number of the optical signal detection positions SP through which the cell C passes when passing through the irradiation position) in order of the depth direction (the z-axis direction) of the flow path 20h. FIG. 20 shows an example in which N is 4 when the cell C passes through four optical signal detection positions SP. In FIG. 20, the portions CP1, CP2, CP3, and CP4 of the cell C respectively pass through the optical signal detection positions SPj+1, SPj+2, SPj+3, and SPj+4 of the optical signal detection position SP.

Furthermore, in FIGS. 19 and 20, the plurality of optical signal detection positions SP are installed in the flow path 20 to gradually become shallower from a deeper position along the movement direction of the fluid flow, but conversely can also be installed to gradually become deeper from a shallower position.

Further, in FIGS. 19 and 20, a case of this embodiment is described in which the optical signal detection position SP is set to a different depth-direction position. However, even when the optical signal detection position SP is installed at a different width-direction position as in the embodiments of the first to third embodiments, the structured illumination light SLE can be similarly irradiated while being inclined by a predetermined angle with respect to the depth direction (the z-axis direction) of the flow path 20h.

Further, FIGS. 19 and 20 describe a case of the structured illumination configuration in which the incident direction of the optical axis of the structured illumination light is inclined by a predetermined angle with respect to the depth direction (the z-axis direction) of the flow path 20 and the propagation direction of the structured illumination light is inclined with respect to the depth direction of the flow path 20. However, the similar configuration can also be taken in the structured detection configuration. That is, in the structured detection configuration, the detection can be performed by inclining the direction of the optical axis of the structured signal light (the propagation direction of the structured signal light) by a predetermined angle with respect to the depth direction (the z-axis direction) of the flow path 20.

At the optical signal detection position SP in the flow path 20, the light spot forming the structured illumination pattern is disposed on a plane perpendicular to the direction of the optical axis (the incident direction) of the structured illumination light SLE. Therefore, the surface of the individual light spot forming the structured illumination pattern (schematically shown as squares in FIG. 20) is oblique with respect to the direction of flow velocity in the flow path 20h. The portions CP1, CP2, CP3, and CP4 of the cell C respectively pass through the optical signal detection positions SPj+1, SPj+2, SPj+3, and SPj+4 having square surfaces arranged obliquely to each other.

As described in the fourth embodiment, it is more preferable to arrange the optical signal detection positions SP so that a gap between the adjacent optical signal detection positions SP in the depth direction (the z-axis direction) of the flow path 20 becomes narrower to a degree that the adjacent optical signal detection positions SP do not overlap each other. In this embodiment, since the optical signal detection position SPh is disposed obliquely with respect to the direction of the flow velocity, a gap between the adjacent optical signal detection positions SPh in the depth direction (the z-axis direction) of the flow path 20 can be made narrow compared to a case in which the surface is parallel to the direction of the flow velocity. In particular, the plurality of optical signal detection positions SPh are preferably arranged without any gap in the depth direction of the flow path 20.

As described above, in the flow cytometer 1h according to this embodiment, the depth direction of the flow path 20h is inclined with respect to the irradiation direction of the structured illumination light (in this embodiment, the structured illumination light SLE). That is, in the flow cytometer 1h, the depth direction of the flow path 20 is inclined by a predetermined angle with respect to the propagation direction of the structured illumination light SLE.

With this configuration, in the flow cytometer 1h according to this embodiment, since it is not necessary to form an image of the structured illumination light (in this embodiment, the structured illumination light SLE) at a different position in the optical axis direction, the structured illumination light can be simply irradiated to the optical signal detection position SPh disposed at a different position in the depth direction of the flow path 20h.

On the other hand, when the depth direction of the flow path 20h is not inclined (is in parallel) with respect to the irradiation direction of the structured illumination light (in this embodiment, the structured illumination light SLE), sophisticated calculations are required to design the spatial light modulation unit 4f such as a DOE that forms an image of the structured illumination light at different positions along the optical axis and the shape of the illumination pattern which can be supplied by the spatial light modulation unit 4 is restricted. In the flow cytometer 1h according to this embodiment, in the sense that only the relative orientations of the flow path 20h and the structured illumination light SLE are adjusted, the structured illumination light can be simply irradiated to a different position in the depth direction of the flow path 20h on the plane of the width-direction position where the passage of the cell C is allowed compared to a case in which the spatial light modulation unit is optically designed.

Further, in the flow cytometer 1h according to this embodiment, the plurality of optical signal detection positions SPh may be arranged without any gap in the depth direction of the flow path 20h.

With this configuration, in the flow cytometer 1h according to this embodiment, since each portion of the cell C passes through any one of the plurality of optical signal detection positions SPh, it is possible to suppress generation of portions that fail to be detected in the cell C.

### (Sixth embodiment)

Hereinafter, a sixth embodiment of the present invention will be described in detail with reference to the drawings.

In the fourth and fifth embodiments, a configuration in which the spatial light modulation unit 4f is disposed in the optical path between the light source and the flow path and modulates the illumination light LE has been described. In this embodiment, a case in which the spatial light modulation unit is installed in the optical path between the flow path and the photodetector and detects the structured signal light will be described.

The flow cytometer according to this embodiment is referred to as a flow cytometer 1k.

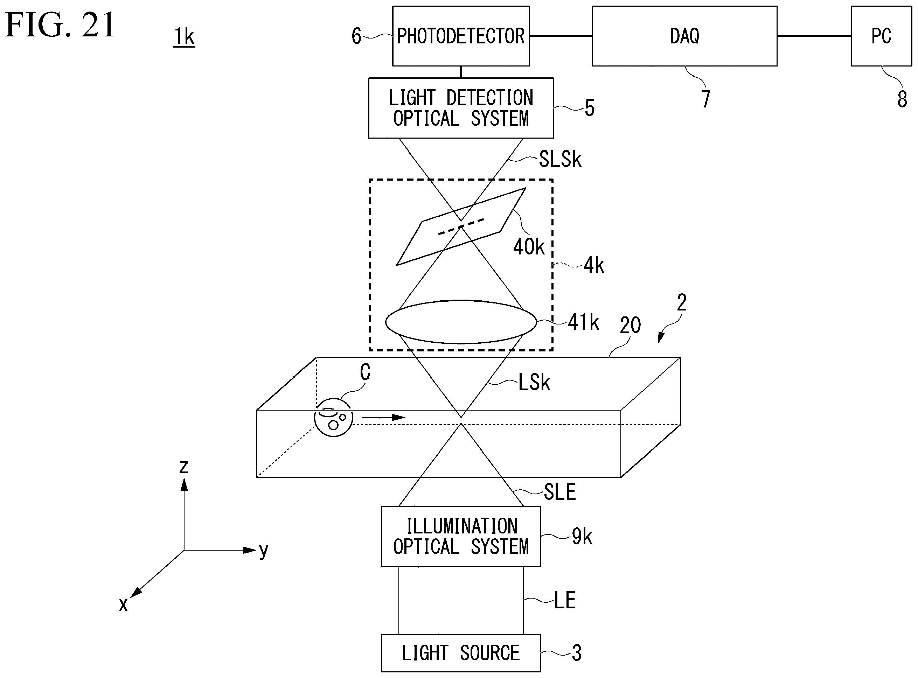

FIG. 21 is a diagram showing an example of the flow cytometer 1k according to this embodiment. The configuration of the flow cytometer 1k (FIG. 21) is the same as the configuration of the flow cytometer 1 (FIG. 14) except that an illumination optical system 9k and a spatial light modulation unit 4k are provided instead of the spatial light modulation unit 4f. The spatial light modulation unit 4k includes a first lens 41k and a mask 40k. The first lens 41k and the mask 40k are arranged on the optical path between the flow path 20 and the photodetector 6 in this order from the side closer to the flow path 20. The mask 40k is a spatial filter having a light transmission region consisting of apertures and a light non-transmission region in which light is blocked. Hereinafter, the light transmission region of the mask 40k is referred to as a light transmission region H.

The mask 40k is provided at a position in front of the light detection optical system 5 and the photodetector 6 on the optical path from the flow path 20 to the photodetector 6. That is, signal light LSk from the cell C is detected by the photodetector 6 through the mask 40k and the light detection optical system 5. As in the configuration of FIG. 21, a configuration in which the mask 40k is provided at a position between the flow path 20 and the photodetector 6 on the optical path from the light source 3 to the photodetector 6 is also referred to as a structured detection configuration.

The illumination light LE from the light source 3 illuminates the cell C flowing in the flow path 20 through the illumination optical system 9k. The illumination optical system 9k is a mechanism for uniformly illuminating the flow path 20 and includes a lens. The illumination optical system may also include slits, mirrors, and other optical elements for shaping light.

As described above, the spatial light modulation unit 4k includes the first lens 41k and the mask 40k. The first lens 41k and the mask 40k are arranged in this order from the side closer to the flow path 20 and the first lens 41k collects the signal light LSk from the cell C and forms an image thereof on the mask 40k.

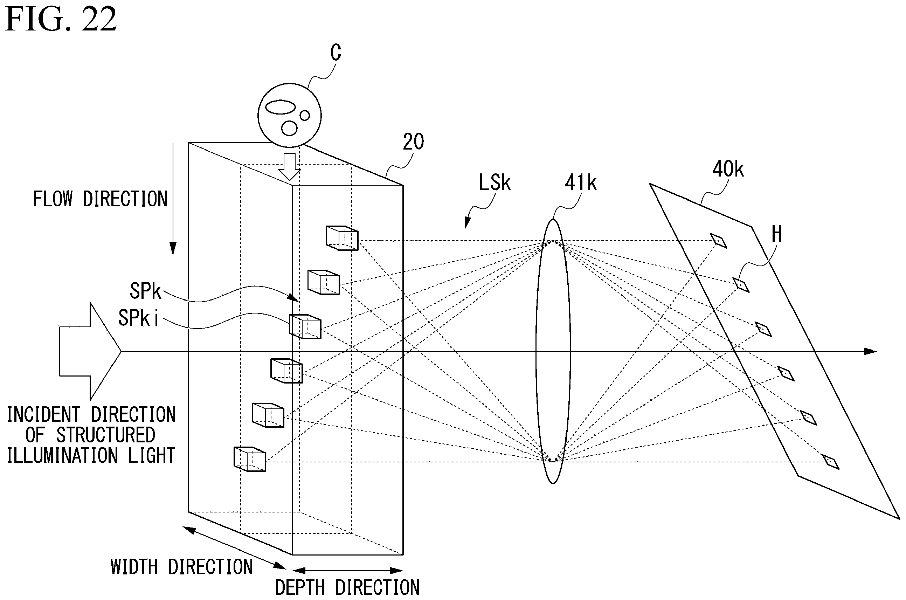

Here, the positional relationship between the plurality of light transmission regions H of the mask 40k and optical signal detection positions SPk on the flow path 20 will be described with reference to FIGS. 21 and 22. The optical signal detection position SPk is at conjugate positions to the light transmission region H of the mask 40k through the first lens 41k on the plane of the width-direction position where the passage of the cell C is allowed in the flow path 20 (plane indicated by a dashed line in FIG. 22).

FIG. 22 is a diagram showing an example of the positional relationship between the mask 40k and the flow path 20 according to this embodiment. The surface of the mask 40k is disposed to be inclined in the depth direction (the z-axis direction) of the flow path 20 with respect to the bottom surface or the top surface of the flow path 20. Therefore, the plurality of light transmission regions H of the mask 40k are arranged at different positions in the depth direction (the z-axis direction) of the flow path 20 with respect to the flow path 20.

The first lens 41k is disposed so that the lens surface is parallel to the bottom surface or the top surface of the flow path 20. The lens surface is in the direction perpendicular to the optical axis of the first lens 41k.

The signal light LSk from the cell C is structured by passing through the plurality of light transmission regions H of the mask 40k and is converted into structured signal light SLSk. Here, the light transmission regions H on the mask 40k and the positions in which the cell C is illuminated by the illumination light LE on the flow path 20 are at conjugate positions with respect to the first lens 41k.

The structured signal light SLSk structured by the mask 40k is imaged by the light detection optical system 5 and is detected by the photodetector 6. In the structured detection, the signal light LSk from the cell C passing through the optical signal detection position SPk on the flow path 20 which is at a conjugate position with the light transmission region H of the mask 40k through the first lens 41k is transmitted through the plurality of light transmission regions H of the mask 40k and is detected by the photodetector 6 in time series through the light detection optical system 5 as the structured signal light SLSk. FIG. 22 shows an example in which the plurality of light transmission regions H of the mask 40k are arranged linearly. Furthermore, in FIG. 22, similarly to FIG. 15, the shape of the optical signal detection position SP in the flow path is schematically illustrated as a cube, but the optical signal detection position SP has a three-dimensional shape centered on the light spot and having a thickness defined by the depth of focus in the optical axis direction.

Due to the structured detection configuration, the function of the optical signal detection position SP of the flow path 20 in the flow cytometer 1 of the fourth embodiment is also exhibited in the flow cytometer 1k. In the structured detection configuration, since the plurality of light transmission regions H of the mask 40k are arranged at positions conjugate with the irradiation position of the illumination light LE of the flow path 20 through the first lens 41k, in the flow cytometer 1k, the arrangement of the light transmission regions H of the mask 40k sets from which positions of the flow path 20 the signal light LSk emitted from the cell C passing through the flow path 20 is acquired. In the example of FIG. 22, the arrangement position of the light transmission region H of the mask 40k is installed so that the optical signal detection position SPk which is a position for acquiring the signal light LSk emitted from the cell C in the flow path 20 is the same as the optical signal detection position SP of the flow cytometer 1 of the fourth embodiment. With this configuration, in the flow cytometer 1k, the signal light LSk from the cell C emitted from the positions corresponding to the plurality of optical signal detection positions SP in the flow cytometer 1 of the fourth embodiment on the flow path 20 can be detected in time series by the photodetector 6 as the intensity of the structured signal light SLSk transmitted through the light transmission regions H of the mask 40k.

In the flow cytometer 1k, it is preferable that the individual shape and size of the light transmission regions H of the mask 40k be the same. Accordingly, each portion of the cell C passing through the flow path 20 can be detected as the same type of structured signal light SLSk. Here, the same type of structured signal light SLSk means that the structured signal light SLSk structured through the individual light transmission region H installed in the mask 40k becomes equal in both quantity and quality if the light irradiated to the mask 40k (for example, the signal light LSk) is the same. Further, the size of the individual light transmission region H of the mask 40k is preferably set to be sufficiently smaller than the size of the image on the observation target (in this example, the cell C) at the position of the mask 40k. Furthermore, on the plane of the depth-direction position where the passage of the cell C is allowed in the flow path 20,it is preferable that the plurality of light transmission regions H of the mask 40k are arranged in the depth direction of the flow path 20 so that the signal light LSk from the cell C passing through the positions linearly at equal intervals in the depth direction (the z-axis direction) of the flow path 20 can be acquired. Because of the above-described configuration, in the flow cytometer 1k, even when the cell C deviates to any position in the depth direction of the flow path 20 and passes through the irradiation position of the flow path 20, temporal changes in the intensity of the optical signal from the detected cell C stay unchanged as in the case of the structured illumination.

Additionally, in the flow cytometer 1k, an example in which the surface of the mask 40k is disposed to be inclined in the depth direction (the z-axis direction) of the flow path 20 with respect to the bottom surface or the top surface of the flow path 20 and the lens surface of the first lens 41k is disposed in parallel to the bottom surface or the top surface of the flow path 20, but the present invention is not limited thereto.

Further, in the flow cytometer 1k, as the photodetector 6 is disposed above the flow path 20 (the +z direction of the z-axis direction), the mask 40k and the first lens 41k are arranged above the flow path 20 (the +z direction of the z-axis direction) in the optical path between the flow path 20 and the photodetector 6. When the photodetector 6 is disposed at a position other than the upper side such as the right side or the left side (the x-axis direction) of the flow path 20, the mask 40k and the first lens 41k are arranged at a position corresponding to the position of the photodetector 6 in the optical path between the flow path 20 and the photodetector 6.

For example, when the photodetector 6 is disposed on the side surface on the right side or the left side of the flow path 20, the mask 40k and the first lens 41k are arranged on the side surface of the flow path 20 in the optical path between the flow path 20 and the photodetector 6. Additionally, when the mask 40k and the first lens 41k are arranged on the side surface of the flow path 20, the plurality of optical signal detection positions SPk can be arranged at different positions in the depth direction (the z-axis direction) of the flow path 20 while the surface of the mask 40k and the lens surface of the first lens 41k are arranged in parallel to the side surface of the flow path 20. When the mask 40k and the first lens 41k are arranged on the side surface of the flow path 20, the first lens 41k does not need to be inclined with respect to the side surface of the flow path 20.

As described above, the mask 40k and the first lens 41k are arranged at a position corresponding to the position of the photodetector 6 with respect to the flow path 20 on the optical path between the flow path 20 and the photodetector 6.

Further, in the flow cytometer 1k, an example of a case in which the spatial light modulation unit 4k includes one first lens 41k as the lens has been described, but the present invention is not limited thereto. The spatial light modulation unit 4k may include a plurality of lenses instead of the first lens 41k as long as the position of the optical signal detection position SPk on the flow path 20 is not changed from the case where the first lens 41k is provided.

Additionally, in the flow cytometer 1k, the trigger signal detection position is also served as the optical signal detection position SPk as an example. Therefore, the light transmission region which is different from the light transmission region H, from which the passage of the light emitted from the position corresponding to the optical signal detection position SPk is allowed, is not installed in the mask 40k in order to set the trigger signal detection position in the flow path 20. Additionally, when the trigger signal detection position is installed separately from the optical signal detection position SPk, the light transmission region which is different from the light transmission region H, from which the passage of the light emitted from the position corresponding to the optical signal detection position SPk is allowed, is installed in the mask 40k to set the trigger signal detection position in the flow path 20.

In the structured detection configuration, as described above, from which positions of the flow path 20 the signal light is detected from the cell C passing through flow path 20 can be set by the arrangement of the light transmission regions H of the mask 40k. Furthermore, in the mask 40k of the flow cytometer 1k, the light transmission regions H of the mask 40k are arranged to acquire the signal light LSk emitted when the cell C passes through a position provided with the trigger signal detection position TPf in the flow cytometer 1 of the fourth embodiment. With this configuration, the flow cytometer 1k can also appropriately generate the recording trigger signal for starting the generation of morphological information on the cell C which is the observation target.

Additionally, the spatial light modulation unit 4k may include a mirror 42k (not shown) functioning as a spatial filter instead of the mask 40k. The mirror 42k is a spatial filter having a light transmission region transmitting light and a light non-transmission region not transmitting light by reflecting the light. Here, when the spatial light modulation unit 4k includes the mirror 42k, a region that reflects the light of the mirror 42k corresponds to the optical signal detection position SPk.

In the spatial light modulation unit 4k (FIG. 21) and the spatial light modulation unit 4f (FIG. 14), different types of light are transmitted in the light transmission region in addition to the installation positions on the side of the photodetector 6 or the side of the light source 3 with respect to the flow path 20. The spatial light modulation unit 4f (FIG. 14) transmits the illumination light LE to form the structured illumination light SLE, but the spatial light modulation unit 4k (FIG. 21) structures the signal light LSk from the cells C such as fluorescence, transmitted light, scattered light, and interference light into the structured signal light SLSk. The spatial light modulation unit 4k (FIG. 21) and the spatial light modulation unit 4f (FIG. 14) are different in the type of irradiation light, but have the similar function of structuring the light.

Additionally, in the fourth embodiment and the modified example thereof, an example of a case in which the irradiation position or the detection position including the optical signal detection position SPf and the trigger signal detection position TPf is set by one spatial light modulation unit has been described, but the present invention is not limited thereto. For example, the optical signal detection position SPf may be set by the structured illumination configuration using the spatial light modulation unit 4f (FIG. 14) and the trigger signal detection position TPf may be set by the structured detection configuration using the spatial light modulation unit 4k. In contrast, the trigger signal detection position TPf may be set by the structured illumination configuration using the spatial light modulation unit 4f (FIG. 14) and the optical signal detection position SPf may be set by the structured detection configuration using the spatial light modulation unit 4k (FIG. 21). In the above case, the wavelength of light used to set the optical signal detection position SPf and the wavelength of light used to set the trigger signal detection position TPf may be the same or different.

Additionally, the optical signal detection position SPf may be set by the spatial light modulation unit 4f (FIG. 14) or the spatial light modulation unit 4k (FIG. 21) and the trigger signal detection position TPf may be set by an optical system including at least a lens without a spatial light modulation unit and the like. In that case, the wavelength of light used to set the optical signal detection position SPf and the wavelength of light used to set the trigger signal detection position TPf may be the same or different.

In the flow cytometer 1k according to this modified example, the regions (in an example, the light transmission regions of the mask 40k) having the same shape and size of the spatial filter (in this example, the mask 40k) are installed at the positions corresponding to the optical signal detection positions SP on the plane of the width-direction position where the passage of the cell C is allowed in the flow path 20. Thereby, the signal light (in this example, the signal light LSk) from the cell C is detected in time series by the photodetector 6 as the optical signal (in this example, the structured signal light SLSk) structured through these regions of the spatial filter.

In the flow cytometer 1k according to this embodiment, the portions of the cell C are detected as the intensity of the optical signal (in this example, the structured signal light SLSk) through the regions (in an example, the light transmission region of the mask 40k) having the same shape and size. With this configuration, as in the flow cytometer 1, it is possible to realize the high-speed measurement while ensuring the reproducibility of the data even when the positional deviation of the depth direction of the streamline occurs.

### (Seventh embodiment)

Hereinafter, a seventh embodiment of the present invention will be described in detail with reference to the drawings.

In the fourth to sixth embodiments, a case in which the optical signal detection positions are arranged at different positions in the depth direction of the flow path 20 on the plane of the width-direction position where the passage of the cell C is allowed has been described. In this embodiment, a case in which the optical signal detection positions are arranged at different positions in the width direction as well as the depth direction of the flow path 20 will be described.

The flow cytometer according to this embodiment is referred to as a flow cytometer 1m.

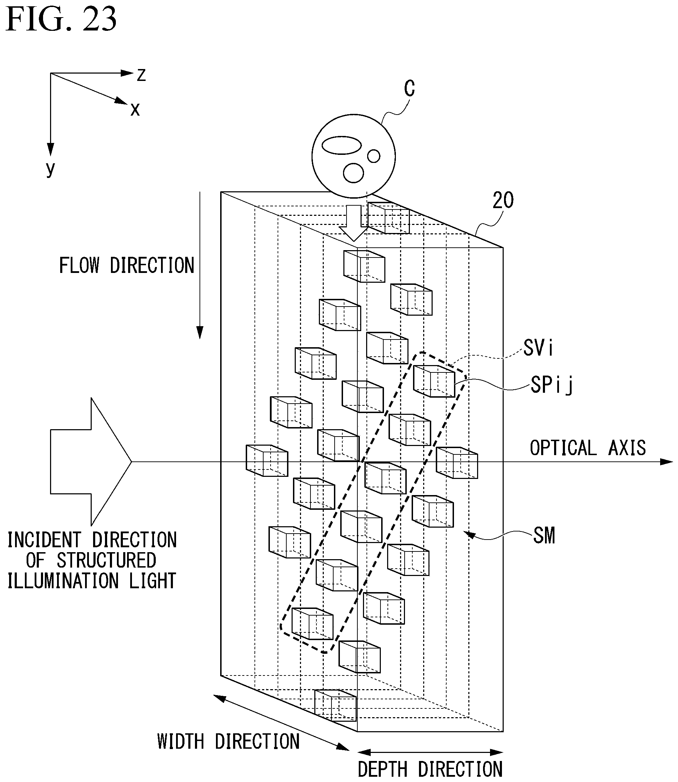

FIG. 23 is a diagram showing an example of the irradiation position according to this embodiment. In FIG. 23, optical signal detection positions SM are arranged linearly at equal intervals in the depth direction (the z-axis direction) of the flow path 20 and the width direction (the x-axis direction) of the flow path 20. The optical signal detection position SP in FIG. 23 has a width (thickness) around the focal plane and has a three-dimensional cubic shape.

The optical signal detection positions SM are configured in units of optical signal detection lines SVi. The optical signal detection line SVi includes a plurality of optical signal detection positions SPij arranged linearly at equal intervals in the depth direction (the z-axis direction) of the flow path 20 on the plane (yz plane at a certain position on the x axis) of the width-direction position of the flow path 20. That is, the optical signal detection line SVi includes the plurality of optical signal detection positions SPij arranged linearly at equal intervals while changing the positions in the depth direction (the z-axis direction) of the flow path 20 and the flow direction (the y-axis direction) of the flow path 20 on the plane (yz plane at a certain position on the x axis) of the width-direction position of the flow path 20. In the example shown in FIG. 23, the optical signal detection line SVi includes six optical signal detection positions SPij. The optical signal detection line SVi corresponds to the optical signal detection position SP (FIG. 18) disposed on the plane (yz plane) at one flow path width position of the fourth embodiment.

The optical signal detection positions SM are configured such that the plurality of optical signal detection lines SVi are arranged in parallel at different positions each other in the length direction (the y-axis direction) on the plane (yz plane) at different positions in the width direction (the x-axis direction) of the flow path 20. In the flow cytometer 1m, the plurality of optical signal detection lines SVi arranged linearly at equal intervals in the depth direction of the flow path 20 are arranged linearly at equal intervals in the width direction of the flow path 20. Preferably, in the flow cytometer 1m, on the a plane (yz plane) in the width direction of the flow path, the plurality of optical signal detection lines SVi which are arranged linearly at equal intervals while changing the positions in the depth direction and the flow direction of the flow path 20 are arranged linearly at equal intervals in the width direction of the flow path 20 while changing the position in the flow direction. In the example shown in FIG. 23, the optical signal detection position SM includes four optical signal detection lines SVi.

Here, the plurality of optical signal detection lines SVi are arranged so that the optical signal detection positions SPij respectively included in the plurality of optical signal detection lines SVi do not overlap each other in the length direction (the y-axis direction) of the flow path 20. Accordingly, it is possible to suppress the occasions that the times for detecting the cells C overlap at the plurality of optical signal detection positions SPij and the intensities of the detected optical signals cannot be separated by the measurement time.

As described above, in the flow cytometer 1m according to this embodiment, a plurality of lines (in this embodiment, the optical signal detection lines SVi) of optical signal detection positions SPij arranged linearly at equal intervals in the depth direction of the flow path 20 on the plane (yz plane) at one width-direction position of the flow path 20 are arranged linearly at equal intervals in the width direction of the flow path 20 (in this embodiment, the optical signal detection positions SM).

With this configuration, in the flow cytometer 1m according to this embodiment, at different depth positions of the flow path 20, the structured illumination is irradiated at the plurality of optical signal detection positions SP which are arranged linearly with an inclination in the depth direction and the width direction. Thereby, even when the positional deviation of the streamline of the cells C flowing in the flow path 20 occurs in any one or more directions of the depth direction and the width direction, the correspondence relationship between the spatial order and the temporal order remain unchanged at all times and the measurement against the positional deviation of the streamline is robust compared to a case in which the structured illumination having a random pattern is irradiated to all irradiation positions of the flow path 20.

Additionally, in the flow cytometer 1m according to this embodiment, similarly to the fifth embodiment, the depth direction of the flow path 20 may be inclined with respect to the irradiation direction of the structured illumination light SLE.

Further, in the flow cytometer 1m according to this embodiment, the light detection optical system 5 and the photodetector 6 may be arranged in the directions perpendicular to the flow direction of the flow path 20 (the length direction of the flow path 20, the y-axis direction) and the direction of the optical axis of the illumination light LE irradiated from the light source 3 with respect to the flow path 20 as described above in the fourth embodiment.

In order to provide high-speed, high-sensitivity, low-cost, and compact imaging devices, a flow cytometer or an imaging cytometer has been developed in which an observation target is illuminated by structured illumination light having a predetermined illumination pattern and the observation target is detected. As an example of this method, for example, a GC technology is known. In the GC technology, by irradiating the observation target moving in the flow path with a randomly structured illumination pattern, morphological information of the observation target can be acquired at high speed with higher resolution than the conventional flow cytometer.

Since the measurement using the GC technology is sensitive to the positional deviation of the streamline. Therefore, when measuring the morphological information of the observation target using the structured illumination or the structured detection and classifying the observation target using machine learning or the like, if the acquired signal light changes drastically according to the deviation of observation target in the direction perpendicular to the flow of the flow path, for example, if the relative positional deviation between the observation target and the illumination pattern occurs due to the instability of the fluid, then classification accuracy can be decreased..

In the flow cytometer according to the above-described embodiment, the translational symmetry of the detected signal light is ensured in the width direction of the flow path, the depth direction of the flow path, or both the depth direction and the width direction. Thereby, robust classification against the errors inherent in fluid instability of systems becomes possible.

Additionally, a part of the information generation devices 10, 10c, and 10d or the image generation device 10e of the above-described embodiment, for example, the signal intensity acquisition unit 110, the signal intensity determination unit 111, the recording unit 112, the learning unit 113c, the identification unit 114c, the sorting unit 115c, the image generation unit 116e, and the display control unit 117e may be realized by a computer. In that case, a program for realizing this control function may be recorded in a computer-readable recording medium, and the program recorded in this recording medium may be read into a computer system and executed. Additionally, the "computer system" referred to here is a computer system built into the information generation devices 10, 10b, and 10c or the image generation device 10e, and includes hardware such as its peripheral devices and OS. In addition, the "computer-readable recording medium" refers to portable media such as flexible disks, magneto-optical discs, ROMs and CD-ROMs, and storage devices such as hard disks built into computer systems. Furthermore, the "computer-readable recording medium" includes those that dynamically store programs for a short period of time, such as communication lines for transmitting programs via networks such as the Internet and communication lines such as telephone lines or those that retain the program for a certain period of time, such as a volatile memory inside a computer system that serves as a server or client in that case. Further, the program may be for realizing a part of the functions described above or may be capable of realizing the functions described above in combination with a program already recorded in the computer system.

Further, a part or all of the information generation devices 10, 10c, and 10d or the image generation device 10e in the above-described embodiments may be realized as an integrated circuit such as large-scale integration (LSI). Each functional block of the information generation devices 10, 10c, and 10d or the image generation device 10e may be processed individually or may be partially or entirely integrated into a processor. Further, an integration circuit technology is not limited to LSI, and may be realized by a dedicated circuit or a general-purpose processor. In addition, when the integration circuit technology that replaces LSI appears due to advances in semiconductor technology, an integrated circuit based on this technology may be used.

Although the embodiments of the present invention have been described in detail with reference to the drawings, the specific configuration is not limited to the one described above and various design changes can be made without departing from the gist of the present invention.

### [Reference Signs List]

1, 1a, 1b, 1c, 1f, 1g, 1h, 1k, 1m Flow cytometer
1d Cell sorter
20, 20c, 20d, 20h Flow path
2 Microfluidic device
6 Photodetector
C Cell
120 Optical information

## Claims

1. A flow cytometer comprising:
a light source which emits illumination light toward an observation target;
a microfluidic device which is provided with a flow path through which the observation target is able to flow together with a fluid;
a photodetector which detects optical signal intensity as intensity of signal light emitted from the observation target in time series;
an information generation device which generates optical information indicating a morphology of the observation target on the basis of the optical signal intensity detected by the photodetector; and
a spatial light modulation unit which is installed on an optical path between the light source and the photodetector and structures any one of the illumination light irradiated from the light source toward the flow path and the signal light emitted from the observation target toward the photodetector,
wherein in the flow path provided in the microfluidic device, a plurality of optical signal detection positions for detecting the optical signal intensity detected by the photodetector by a common method for each portion of the observation target are arranged linearly at equal intervals in a predetermined direction of the flow path by structuring the illumination light or the signal light by the spatial light modulation unit and,
wherein a plurality of trigger signal detection positions for detecting a trigger signal by which the information generation device starts the generation of the optical information are arranged to be separated by the same predetermined distance in a length direction of the flow path while respectively corresponding to the plurality of optical signal detection positions.

2. The flow cytometer according to claim 1,
wherein the predetermined direction of the flow path is a width direction of the flow path.

3. The flow cytometer according to claim 2,
wherein the plurality of optical signal detection positions are arranged on a straight line inclined with respect to the width direction of the flow path and do not overlap each other in the length direction of the flow path.

4. The flow cytometer according to claim 2,
wherein the plurality of optical signal detection positions are arranged without any gap in the width direction of the flow path.

5. A cell sorter comprising:
the flow cytometer according to claim 1; and
a sorting unit which sorts the observation target,
wherein in the flow path provided in the microfluidic device, sorting trigger signal detection positions for detecting a sorting trigger signal for determining when the sorting unit sorts the observation target are arranged linearly in a predetermined direction of the flow path.

6. The flow cytometer according to claim 1,
wherein the predetermined direction of the flow path is a depth direction of the flow path.

7. The flow cytometer according to claim 6,
wherein the plurality of optical signal detection positions are arranged on a straight line inclined with respect to the depth direction of the flow path and do not overlap each other in the length direction of the flow path.

8. The flow cytometer according to claim 6,
wherein the plurality of optical signal detection positions are arranged without any gap in the depth direction of the flow path.

9. The flow cytometer according to claim 2 or 6,
wherein the trigger signal detection positions are disposed on an upstream side of the flow path in relation to the optical signal detection positions.

10. The flow cytometer according to claim 2 or 6,
wherein the trigger signal detection positions are also served as the plurality of optical signal detection positions.

11. The flow cytometer according to claim 2 or 6,
wherein the spatial light modulation unit is a spatial filter which is installed in an optical path between the light source and the flow path and has a plurality of light transmission regions having the same shape and size at positions corresponding to the plurality of optical signal detection positions, and
wherein the illumination light from the light source is structured by the spatial light modulation unit and the structured illumination light is irradiated to the optical signal detection position disposed in the flow path.

12. The flow cytometer according to claim 11,
wherein the optical signal detection positions are illuminated by the same type of structured light.

13. The flow cytometer according to claim 2 or 6,
wherein the spatial light modulation unit is a spatial filter which is installed in an optical path between the flow path and the photodetector and has a plurality of light transmission regions having the same shape and size at positions corresponding to the plurality of the optical signal detection positions arranged in flow path, and
wherein the photodetector detects the optical signal intensity in time series through the plurality of light transmission regions of the spatial filter.

14. The flow cytometer according to claim 11 or 13,
wherein the depth direction of the flow path is inclined with respect to a propagation direction of the structured illumination light or a propagation direction of the structured signal light.

15. The flow cytometer according to claim 11 or 13,
wherein the plurality of trigger signal detection positions to detect a trigger signal by which the information generation device starts the generation of the optical information are arranged to be separated by the same predetermined distance in the length direction of the flow path while respectively corresponding to the plurality of optical signal detection positions due to the structuring.

16. The flow cytometer according to claim 1,
wherein an optical signal detection line is provided on a plane of a width-direction position of the flow path in which the plurality of optical signal detection positions are arranged linearly at equal intervals with a positional deviation in the depth direction of the flow path and the length direction of the flow path, and
wherein the plurality of optical signal detection lines are arranged linearly at equal intervals at different width-direction positions of the flow path and are arranged in parallel at different length-direction positions of the flow path.

17. An optical information generation method of generating optical information for an observation target using a flow cytometer including: a light source which emits illumination light toward an observation target; a microfluidic device which is provided with a flow path through which the observation target is able to flow together with a fluid; a photodetector which detects optical signal intensity as intensity of signal light emitted from the observation target in time series; an information generation device which generates optical information indicating a morphology of the observation target on the basis of the optical signal intensity detected by the photodetector; and a spatial light modulation unit which is installed on an optical path between the light source and the photodetector and structures any one of the illumination light irradiated from the light source toward the flow path and the signal light emitted from the observation target toward the photodetector, in the flow path provided with the microfluidic device in the flow cytometer, a plurality of optical signal detection positions being arranged linearly at equal intervals in a predetermined direction of the flow path by structuring the illumination light or the signal light by the spatial light modulation unit and a plurality of trigger signal detection positions being arranged to be separated by the same predetermined distance in a length direction of the flow path while respectively corresponding to the plurality of optical signal detection positions, the optical information generation method comprising:
a trigger signal detection step of detecting a trigger signal for the information generation device to start the generation of optical information at the trigger signal detection position;
an optical signal detection step of detecting the optical signal intensity detected by the photodetector at the optical signal detection position by a common method for each portion of the observation target;
an optical information generation start step of starting the generation of the optical information when the trigger signal is detected in the trigger signal detection step; and
an optical information generation step of generating the optical information on the basis of the optical signal intensity detected in the optical signal detection step when the generation of the optical information is started in the optical information generation start step.

18. A program of allowing a flow cytometer, including: a light source which emits illumination light toward an observation target; a microfluidic device which is provided with a flow path through which the observation target is able to flow together with a fluid; a photodetector which detects optical signal intensity as intensity of signal light emitted from the observation target in time series; an information generation device which generates optical information indicating a morphology of the observation target on the basis of the optical signal intensity detected by the photodetector; and a spatial light modulation unit which is installed on an optical path between the light source and the photodetector and structures any one of the illumination light irradiated from the light source toward the flow path and the signal light emitted from the observation target toward the photodetector, in the flow path provided with the microfluidic device in the flow cytometer, a plurality of optical signal detection positions being arranged linearly at equal intervals in a predetermined direction of the flow path by structuring the illumination light or the signal light by the spatial light modulation unit and a plurality of trigger signal detection positions being arranged to be separated by the same predetermined distance in a length direction of the flow path while respectively corresponding to the plurality of optical signal detection positions, to perform an optical information generation start step of starting the generation of the optical information when the trigger signal is detected in a trigger signal detection step where a trigger signal for the information generation device to start the generation of the optical information at the trigger signal detection position is detected and an optical information generation step of generating the optical information on the basis of the optical signal intensity detected in an optical signal detection step where the optical signal intensity detected by the photodetector is detected by a common method for each portion of the observation target at the optical signal detection position when the generation of the optical information has already been started in the optical information generation start step in order to generate the optical information for the observation target in the flow cytometer by a computer.
